# EUROPEAN PATENT APPLICATION

(11) **EP 3 499 831 A1**
(43) Date of publication of application: **19.06.2019**
(21) Application number: 17842599.7
(22) Date of filing: 17.04.2017
(51) Int. Cl.: H04L 27/26, H04L 5/00

(54) **DATA SIGNAL PROCESSING METHOD AND RELATED DEVICE**

(30) Priority: 26.08.2016 CN 201610738379
(71) Applicant: Huawei Technologies Co., Ltd., Longgang District Shenzhen, Guangdong 518129 (CN)
(72) Inventor: LIU, Yun, Shenzhen Guangdong 518129 (CN); GAN, Ming, Shenzhen Guangdong 518129 (CN)
(74) Representative: Maiwald Patent- und Rechtsanwaltsgesellschaft mbH
(86) International application number: PCT/CN2017/080770
(87) International publication number: WO 2018/036174

(57) **Abstract**

This application relates to the field of communications technologies, and in particular, to a data signal processing technology. Specifically, in a data signal processing method applied to a transmit end, resource units used to transmit data signals are grouped into a plurality of data subcarrier groups, and data signal sequences that are not exactly the same are determined for the data subcarrier groups. In this way, the data signal sequences transmitted by the resource units can be prevented from being modulated by signals with a same initial phase, thereby avoiding occurrence of relatively large instantaneous peak power, further decreasing a PAPR, and extending a data signal transmission distance. Correspondingly, this application further provides a signal processing method applied to a receive end. In addition, this application further provides a related device, to ensure application and implementation of the method in practice.

## Description

This application claims priority to Chinese Patent Application No. 201610738379.5, filed with the Chinese Patent Office on August 26, 2016 and entitled "DATA SIGNAL PROCESSING METHOD AND RELATED DEVICE", which is incorporated herein by reference in its entirety.

### TECHNICAL FIELD

This application relates to the field of communications technologies, and more specifically, to a data signal processing technology.

### BACKGROUND

Communication of a wireless local access network (Wireless local Access Network, WLAN for short) uses protocol standards of the IEEE 802.11 family, including the new-generation 802.11ax standard. This standard supports an OFDMA (Orthogonal Frequency-Division Multiple Access, orthogonal frequency division multiple access) technology. In the OFDMA technology, a broadband channel is divided into resource units (Resource Unit, RU for short) in frequency domain, and a data signal is transmitted by using a resource unit.

Currently, in a WLAN, a method for repeatedly transmitting a data signal in frequency domain is repeatedly transmitting a same data signal by using an RU. However, a peak-to-average power ratio (peak-to-average power ratio, PAPR for short) in this method is relatively high, affecting a transmission distance of the data signal.

### SUMMARY

In view of this, this application provides a data signal processing method, to decrease a PAPR of a data signal sequence generated by a transmit end.

To achieve the foregoing objective, this application provides the following technical solutions.

According to one aspect, an embodiment of this application provides a data signal processing method applied to a transmit end. The method includes: obtaining an original data signal sequence and M resource units, where M is an integer greater than or equal to 1, and the resource units include data subcarriers; grouping the data subcarriers in the M resource units into a plurality of groups, where a quantity of data subcarriers in each data subcarrier group is equal to a quantity of data signals in the original data signal sequence; determining a corresponding target data signal sequence for each data subcarrier group based on the original data signal sequence, where phases and/or orders of a plurality of target data signal sequences are not exactly the same; and sending the target data signal sequence by using the data subcarrier group. According to the solution provided in this embodiment, phases and/or orders of a plurality groups of data signal sequences sent by the transmit end are different, in other words, signal values of the plurality groups of data signal sequences are not exactly the same, thereby decreasing a PAPR of a data signal sequence sent by the transmit end, and extending a communication distance.

In a possible design, a frequency-based sorting relationship of the data subcarrier groups exists. The original data signal sequence may be determined as a target data signal sequence corresponding to a first data subcarrier group; and an order and/or a phase of the original data signal sequence are/is adjusted by using a predetermined signal adjustment method, and the adjusted data signal sequence is determined as a target data signal sequence corresponding to a subsequent data subcarrier group. According to the solution provided in this embodiment, the transmit end transmits the original data signal sequence by using the first data subcarrier group in the plurality of data subcarrier groups, so that the receive end can conveniently determine the original data signal sequence, and restore the adjusted data signal sequence based on the original data signal sequence.

In a possible design, the original data signal sequence is x, and an applied signal adjustment method includes at least one signal phase adjustment method, at least one signal order adjustment method, or at least one signal phase adjustment method and at least one signal order adjustment method in the following: x, -x, j^{∗}x, -j^{∗}x, x(end:-1:1), -x(end:-1:1), j^{∗}x(end:-1:1), and -j^{∗}x(end:-1:1). According to the solution of this embodiment, the applied signal adjustment method can cause a change to a phase or an order of a data signal in the original data signal sequence, or cause changes to both a phase and an order of a data signal in the original data signal sequence. In addition, in the phase adjustment method, a phase is adjusted by an integer multiple of 90 degrees, and the order adjustment method is related to a sorting order. Implementations of phase adjustment and order adjustment are relatively simple.

In a possible design, a signal adjustment method is selected from predetermined signal adjustment methods, where a quantity of the signal adjustment methods is one less than a quantity of the data subcarrier groups, to obtain a plurality of signal adjustment method combinations. A signal adjustment method in each signal adjustment method combination is used to: adjust the order and/or the phase of the original data signal sequence to obtain the adjusted data signal sequence; calculate a peak-to-average power ratio PAPR of each adjusted data signal sequence to the original data signal sequence; and use an adjusted data signal sequence corresponding to a minimum PAPR as the target data signal sequence of the subsequent data subcarrier group. According to the solution of this embodiment, a signal adjustment method that can enable a smallest PAPR of a sent data signal sequence is selected from the plurality of signal adjustment method combinations, thereby achieving an optimal PAPR decreasing effect.

In a possible design, the data subcarriers of the M resource units are sorted in ascending order or descending order of frequencies, and data subcarriers whose quantity is the same as the quantity of the data signals in the original data signal sequence are sequentially grouped into one data subcarrier group. According to the solution of this embodiment, subcarrier groups are sequentially obtained through grouping according to a changing pattern of subcarrier frequencies, and this grouping manner is relatively simple and easy to implement.

In a possible design, a frequency of the resource unit is within 20 MHz, and a quantity of data subcarriers included in the resource unit is 26, 52, or 106. A subcarrier range of a resource unit including 26 data subcarriers is [-121:95] or [96:121]; a subcarrier range of a resource unit including 52 data subcarriers is [-121:-70], [-68:-17], [17: 68], or [70:121]; and a subcarrier range of a resource unit including 106 data subcarriers is [-122:-17] or [17:122]. A specific resource unit is used as an example in the solution of this embodiment to implement the technical solution of this application.

According to another aspect, corresponding to the signal processing method applied to a transmit end, an embodiment of this application provides a data signal processing method applied to a receive end. The method includes: receiving data signal sequences transmitted by a plurality of data subcarrier groups; distinguishing between an original data signal sequence and an adjusted data signal sequence that are in the data signal sequences, where the adjusted data signal sequence is obtained after a phase and/or an order of the original data signal sequence are/is adjusted; and restoring the adjusted data signal sequence to the original data signal sequence. In this embodiment, the receive end receives the plurality of data signal sequences, including the original data signal sequence and the data signal sequence obtained after the phase and/or the order are/is adjusted. The receive end needs to distinguish between the original data signal sequence and the adjusted data signal sequence, and restore the identified adjusted data signal sequence to the original data signal sequence, to extract data.

In a possible design, a first data signal sequence is used as the original data signal sequence, and a data signal sequence following the first data signal sequence is used as the adjusted data signal sequence. In this embodiment, the receive end may agree with the transmit end on that the first data signal sequence in the plurality of received data signal sequences is the original data signal sequence, so that the receive end may distinguish between the original data signal sequence and the adjusted data signal sequence. In the solution of this embodiment, a location of the original data signal sequence is fixed and agreed on, and the transmit end does not need to send extra data to notify the receive end of location information of the original data signal sequence.

In another possible design, the transmit end may send an identifier bit to identify a data subcarrier group that transmits the original data signal sequence. In this way, after data signal sequences transmitted by the data subcarrier groups are received, the original data signal sequence is extracted from a corresponding data subcarrier group based on the identifier bit, and a data signal sequence transmitted by a remaining data subcarrier group is determined as the adjusted data signal sequence. In the solution of this embodiment, a location of the original data signal sequence is relatively flexible, and the transmit end may set the location of the original data signal sequence according to a requirement of the transmit end, but needs to send a flag bit to notify the receive end of information about the location in which the original data signal sequence is set.

According to another aspect, an embodiment of this application provides a data signal processing apparatus applied to a transmit end. The apparatus has a function of implementing the data signal processing method applied to a transmit end. The function may be implemented by hardware, or may be implemented by hardware by executing corresponding software. The hardware or the software includes one or more modules corresponding to the foregoing functions.

According to another aspect, an embodiment of this application provides a data signal processing apparatus applied to a receive end. The apparatus has a function of implementing the data signal processing method applied to a receive end. The function may be implemented by hardware, or may be implemented by hardware by executing corresponding software. The hardware or the software includes one or more modules corresponding to the foregoing functions.

According to another aspect, an embodiment of this application provides a transmit end, where a structure of the transmit end includes a processor and a transmitter, and the processor is configured to support a corresponding function in the data signal processing method applied to a transmit end. The transmitter is configured to support communication between the transmit end and a receive end, and send data in the foregoing method to the receive end. The transmit end may further include a memory, where the memory is configured to couple to the processor and store a program instruction and data that are necessary for the transmit end.

According to another aspect, an embodiment of this application provides a receive end, where a structure of the receive end includes a processor and a receiver, and the processor is configured to support a corresponding function in the data signal processing method applied to a receive end. The receiver is configured to support communication between a transmit end and the receive end, and receive data sent by the transmit end. The receive end may further include a memory, where the memory is configured to couple to the processor and store a program instruction and data that are necessary for the transmit end.

According to still another aspect, an embodiment of this application provides a computer storage medium, configured to store a computer software instruction used by the foregoing data signal processing apparatus, and the computer storage medium includes a program designed for performing the foregoing aspects.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show only embodiments of this application, and a person of ordinary skill in the art may still derive other drawings from the provided accompanying drawings without creative efforts.
FIG. 1 is an architectural diagram of an application scenario of a wireless local area network according to this application;
FIG. 2 is a schematic diagram of a location of a pilot subcarrier of each RU in a 20 MHz frequency band range according to this application;
FIG. 3 is a flowchart of a data signal processing method applied to a transmit end according to this application;
FIG. 4 to FIG. 29 are schematic diagrams of different used resource units according to this application;
FIG. 30 is a schematic structural diagram of a data signal processing apparatus applied to a transmit end according to this application; and
FIG. 31 is a schematic structural diagram of a data signal processing apparatus applied to a receive end according to this application.

### DESCRIPTION OF EMBODIMENTS

Technical solutions provided in this application are applicable to, but are not limited to, a wireless local access network (Wireless local Access Network, WLAN for short).

To facilitate understanding of this application, application scenarios of the technical solutions are first described.

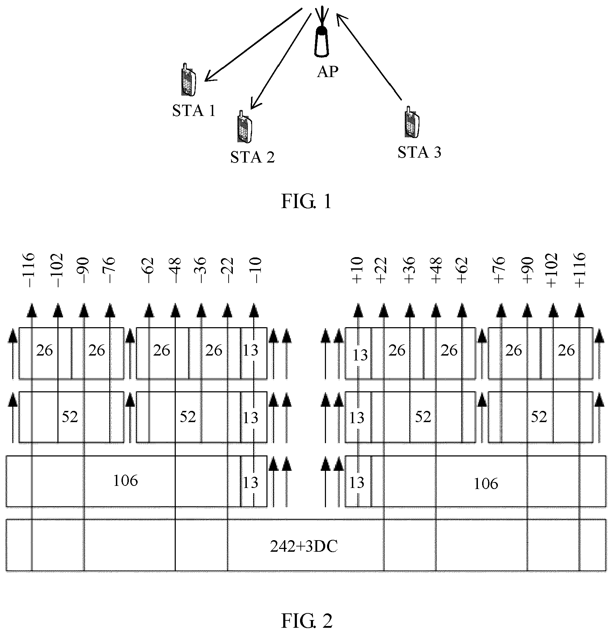

FIG. 1 shows an architecture for an application scenario of a wireless local area network. As shown in FIG. 1, an access point (Access Point, AP for short) is responsible for bidirectional communication with a plurality of stations (Station, STA for short). In other words, the AP sends downlink data to the STAs (for example, a STA 1 and a STA 2 in FIG. 1), or receives uplink data from the STAs (for example, a STA 3 in FIG. 1).

An OFDMA technology is used for communication in the wireless local area network WLAN, so as to divide a bandwidth channel into a plurality of orthogonal subcarriers in frequency domain, and allocate different subcarriers to different users, so as to implement multi-user orthogonal multiplex transmission.

A frequency domain resource is divided into resource units (Resource Unit, RU for short), and the RU includes subcarriers. There are different types of RUs, and each type of RU includes a different quantity of subcarriers and has a different subcarrier serial number range. A 20 MHz frequency band range is used as an example to describe division of resource units in this frequency band range in the 802.11ax standard.

As shown in Table 1, the resource units may be classified into four types based on different quantities of subcarriers: 26, 52, 106, and 242. For a specific type of resource units, for example, resource units including 26 subcarriers, the resource units may be classified into nine types based on different subcarrier ranges, namely, an RU 1, an RU 2, an RU 3, an RU 4, an RU 5, an RU 6, an RU 7, an RU 8, and an RU 9 in rows 2 and 3. Subcarrier serial numbers of the resource unit RU 1 including 26 subcarriers ranges from -121 to -96, and a total of 26 subcarriers are covered. Likewise, subcarrier ranges of the resource units including 52, 106, and 242 subcarriers can be obtained from Table 1.

**Table 1**

| RU type | | | | | |
|---|---|---|---|---|---|
| Resource unit including 26 subcarriers | RU 1 [-121:-96] | RU 2 [-95:-70] | RU 3 [-68:-43] | RU 4 [-42:-17] | RU 5 [-16:-4, 4:16] |
| | RU 6 [17:42] | RU 7 [43:68] | RU 8 [70:95] | RU 9 [96:121] | - |
| Resource unit including 52 sub carriers | RU 1 [-121:-70] | RU 2 [-68:-17] | RU 3 [17:68] | RU 4 [70:121] | - |
| Resource unit including 106 sub carriers | RU 1 [-122:-17] | | RU 2 [17: 122] | | - |
| Resource unit including 242 subcarriers | RU 1 [-122:-2, 2:122] | | | | |

Subcarriers in an RU may be classified into a pilot subcarrier and a data subcarrier. The pilot subcarrier is used to trace a channel change in a data transmission process, and the data subcarrier is used to transmit a data signal.

For intuitive understanding of the pilot subcarrier, locations of pilot subcarriers of RUs in the 20 MHz frequency band range are clearly marked in FIG. 2. As shown in FIG. 2, pilot subcarriers of the resource unit RU 1 [-121:-96] including 26 subcarriers are located in -116 and -102; pilot subcarriers of the resource unit RU 1 [-121:-70] including 52 subcarriers are located in -116, -102, -90, and -76; pilot subcarriers of the resource unit RU 1 [-122:-17] including 106 subcarriers are located in -116, -90, -48, and -22, and on the like.

A data subcarrier may be used to transmit a data signal. In a long-distance transmission application scenario of a wireless local area network, factors such as costs and a transmission distance need to be considered.

An Internet of Things (Internet of Thing, IoT for short) is used as an example. Generally, a large quantity of IoT terminals are widely deployed, and widely distributed IoT terminals require long-distance transmission. Due to a cost factor, maximum power of a transmit end is limited. Therefore, a technical solution that meets a transmission distance requirement in a case of the limited maximum power is required.

It may be understood that a transmission distance is related to average power of data signal transmission, where the average power is equal to peak power divided by a peak-to-average power ratio, the peak power is the foregoing maximum power, and the peak-to-average power ratio (peak-to-average power ratio) may be referred to as PAPR. It can be learned from the formula that when the peak power is limited, reducing the PAPR can increase the average power, thereby extending a transmission distance.

Currently, a data signal transmit end of the Internet of Things uses a frequency domain repeated transmission method. In this method, a data signal is repeatedly transmitted on data subcarriers of different RUs, resulting in a relatively high data subcarrier transmission gain. However, because repeatedly transmitted data signals are the same, relatively large instantaneous peak power is generated when superposed data signals are modulated by signals with a same initial phase, causing a significant increase of the PAPR, and affecting a transmission distance of a superposed signal of the transmit end.

This application provides a data signal processing method to decrease a PAPR of a data signal of a transmit end. A purpose of the method is to reduce the PAPR by adjusting phases and/or orders of data signals transmitted by different repetition modules in an RU.

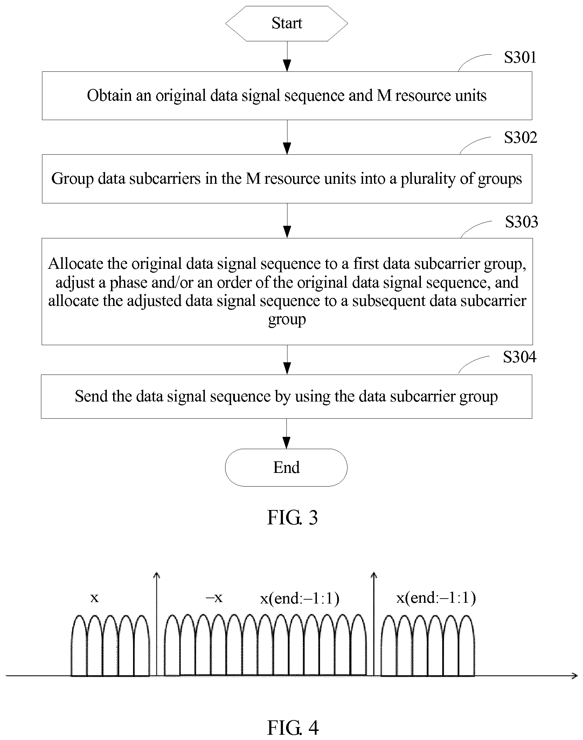

FIG. 3 shows a procedure of a data signal processing method applied to a transmit end. It should be noted that in the application scenario shown in FIG. 1, when the AP sends data to a STA, the AP serves as a transmit end, and when a STA sends data to the AP, the STA serves as a transmit end. As shown in FIG. 3, the procedure specifically includes the following S301 to S304.

S301: Obtain an original data signal sequence and M resource units.

The transmit end continuously generates data signals, and uses a plurality of to-be-transmitted data signals as a data signal sequence. For ease of distinguishing between the data signal sequence and an adjusted data signal sequence in the following description, the data signal sequence herein is referred to as the original data signal sequence.

M is an integer greater than or equal to 1; in other words, one or more resource units are obtained.

S302: Group data subcarriers in the M resource units into a plurality of groups.

A resource unit includes data subcarriers, and the data subcarriers of the M resource units are sorted in ascending order or descending order of frequencies, and data subcarriers whose quantity is the same as a quantity of data signals in the original data signal sequence are sequentially grouped into one data subcarrier group. The data subcarrier group is used to repeatedly transmit a data signal sequence, and therefore may also be referred to as a repetition module.

An RU 1 including 26 subcarriers is used as an example for description. The RU 1 includes 24 data subcarriers, and the 24 data subcarriers are sorted in ascending order of frequencies. It is assumed that the original data signal sequence includes six data signals, and every six data subcarriers in the sorted data subcarriers are grouped into one data subcarrier group. In this way, four data subcarrier groups are obtained.

Regardless of whether a single RU or a plurality of RUs are used for repeated transmission, it is best to group all data subcarriers in the RU to make full use of RU resources. Therefore, a quantity of times for which repeated transmission is performed needs to be determined based on a total quantity of the data subcarriers in the RU and a quantity of data signals in the data signal sequence. Alternatively, a quantity of data signals in the data signal sequence needs to be determined based on a total quantity of data subcarriers in the RU and a quantity of times for which repeated transmission is performed.

The following uses a single RU as an example for description.

In the RU including 26 subcarriers, a quantity of data subcarriers is 24 after two pilot subcarriers are excluded. If repeated transmission is performed for N times (N = 2, 3, 4, 6...), the data signal sequence may include 24/N data signals. In the RU including 52 subcarriers, a quantity of data subcarriers is 48 after four pilot subcarriers are excluded. If repeated transmission is performed for N times (N = 2, 3, 4, 6...), the data signal sequence may include 48/N data signals. In the RU including 106 subcarriers, a quantity of data subcarriers is 102 after four pilot subcarriers are excluded. If repeated transmission is performed for N times (N = 2, 3, 6...), the data signal sequence may include 102/N data signals.

It should be noted that the quantity of times for repeated transmission is related to a bit error rate, and a larger quantity of times for repeated transmission results in a lower bit error rate. Therefore, a corresponding quantity N of times for repeated transmission may be set based on an expected bit error rate during implementation. That N is equal to 4 is used as a grouping example for description in this application. Certainly, this value is not an only option, and the quantity N of times for repeated transmission may be set to another value.

Certainly, after the quantity N of times for repeated transmission is determined, if not all data subcarriers can be grouped, a small quantity of data subcarriers may be removed, and then a quantity of data signals included in the data signal sequence may be determined based on a quantity of remaining data subcarriers and the quantity N of times for repeated transmission.

For example, the RU including 106 subcarriers includes 102 data subcarriers. If repeated transmission is performed for four times, because 102 cannot be exactly divisible by 4, two data subcarriers in the middle may be removed, so that 100 data subcarriers are used to repeatedly transmit a data signal sequence, and a quantity of data signals included in each data signal sequence is 25 (100/4).

A data subcarrier may be randomly removed. Preferably, a feedback signal indicating channel quality may be received to achieve a relatively good transmission effect. A relatively poor channel is determined based on the feedback signal, and a subcarrier transmitted on the relatively poor channel is removed.

After the data subcarrier groups are obtained, a to-be-transmitted data signal sequence is determined for each data subcarrier group according to the following steps.

S303. Allocate the original data signal sequence to a first data subcarrier group, adjust a phase and/or an order of the original data signal sequence, and allocate the adjusted data signal sequence to a subsequent data subcarrier group.

A frequency-based sorting relationship of the data subcarriers may determine a sorting relationship of the data subcarrier groups. For example, the data subcarrier groups are sequentially a data subcarrier group 1, a data subcarrier group 2, a data subcarrier group 3, and a data subcarrier group 4 in ascending order of frequencies of the data subcarrier.

Each data subcarrier group transmits one data signal sequence. For ease of obtaining an original data signal by a receive end, the original data signal sequence may be transmitted in the RU and placed in the first data subcarrier group, and then the adjusted data signal sequence may be transmitted in the subsequent data subcarrier group.

The adjusted data signal sequence is a data signal sequence obtained after the phase and/or the order of the original data signal sequence are/is adjusted. Adjusting the phase and/or the order of the original data signal sequence includes three cases: adjusting a phase of a data signal in the original data signal sequence; adjusting an order of a data signal in the original data signal sequence; or adjusting a phase and an order of a data signal in the original data signal sequence.

For ease of description, the adjusted data signal sequence may be referred to as a target data signal sequence, and the original data signal sequence and the target data signal sequence may be collectively referred to as data signal sequences.

It should be noted that corresponding data signal sequences are determined for the data subcarrier groups in this step. To reduce a PAPR, in addition to the original data signal sequence, the determined data signal sequences further include the data signal sequence whose phase and/or order are/is adjusted, to ensure that the data signal sequences are not exactly the same.

S304. Send the data signal sequence by using the data subcarrier group.

After the data signal sequence to be transmitted in each data subcarrier group in the RU is determined, the transmit end performs Fourier transformation on each data signal to convert a frequency domain signal into a time domain signal, and adds the time domain signal to a data field of a transmission frame with a predetermined structure and sends out the data field. In an application scenario of the Internet of Things, the transmission frame with the predetermined structure is a transmission frame used by the Internet of Things.

On a receive end side, after the transmission frame is received, the time domain signal represented by the data field is extracted, and the time domain signal is converted into a frequency domain signal through Fourier transformation, to obtain each data signal sequence transmitted by the RU. Then, restoration processing is performed on the adjusted data signal sequence according to a method used by the transmit end for adjusting a phase and/or an order, to restore the adjusted data signal sequence to the original data signal sequence. Then, one or more original data signal sequences are selected from original data signal sequences, and are combined and decoded to obtain a sent data signal.

It can be learned from the foregoing technical solution that, the data signal processing method applied to a transmit end provided in this application is used to divide a resource unit used to transmit a data signal into a plurality of data subcarrier groups, and data signal sequences determined for the data subcarrier groups are not exactly the same. In this way, the data signal sequences transmitted by the resource unit are prevented from being modulated by signals with a same initial phase, thereby avoiding occurrence of relatively large instantaneous peak power, decreasing a PAPR, and extending a data signal transmission distance.

The foregoing procedure includes adjustment on the phase and/or the order of the original data signal sequence, and there is a plurality of specific adjustment methods. For simple implementation, this application provides the following eight types. The original data signal sequence may be denoted as x.
(1) x: Repeated transmission is directly performed without any adjustment.
(2) -x: Negative signals of all data signals in x are selected to change phases by 180 degrees.
(3) j^{∗}x: All data signals in x are multiplied by an imaginary number j, to change phases by 90 degrees.
(4) -j^{∗}x: All data signals in x are multiplied by an imaginary number -j, to change phases by 270 degrees.
(5) x(end:-1:1): All data signals in x are converted into reverse-order signals, to reverse the order.
(6) -x(end:-1:1): All data signals in x are converted into reverse-order signals, and negative signals of the reverse-order signals are obtained, to reverse the order and change phases by 180 degrees.
(7) j^{∗}x(end:-1:1): All data signals in x are converted into reverse-order signals, and are multiplied by an imaginary number j, to reverse the order and change phases by 90 degrees.
(8) -j^{∗}x(end:-1:1): All data signals in x are converted into reverse-order signals, and are multiplied by an imaginary number -j, to reverse the order and change phases by 270 degrees.

The data signals in the original data signal sequence x have an order, and the converting the data signals into reverse-order signals is resorting the data signals in a reverse order of the order. For example, x includes 4 data signals, and an order is x = [x(1), x(2), x(3), x(4)], and then the reverse-order signals x(end:-1:1) = [x(4), x(3), x(2), x(1)].

It can be learned that the foregoing second to fourth methods can adjust the phase of the original data signal sequence, and the fifth method can adjust the order of the original data signal sequence, and the sixth to the eighth method can adjust the phase and the order of the original data signal sequence.

It should be noted that the foregoing eight signal adjustment methods are merely examples, and another method that is for adjusting a phase and/or an order of a data signal and that can be expected and obtained by a person skilled in the art may further be included. For example, an angle of phase adjustment is not limited to 90 degrees, 180 degrees, or 270 degrees, or may be another angle value that ranges from 0 degrees to 360 degrees. Order adjustment may not necessarily be reverse-order, and may alternatively be performed in a manner of sequentially moving the data signals by a specific quantity of bits. For example, the original data signal sequence is [x(1), x(2), x(3), x(4)], a data signal sequence obtained after the data signals are sequentially moved by one bit is [x(2), x(3), x(4), x(1)], a data signal sequence obtained after the data signals are sequentially moved by two bits is [x(3), x(4), x(1), x(2)], and a data signal sequence obtained after the data signals are sequentially moved by three bits is [x(4), x(1), x(2), x(3)].

A specific signal adjustment method used to obtain a target data signal sequence to be determined for a subsequent data subcarrier may be selected from the foregoing eight signal adjustment methods through comparison.

Specifically, a signal adjustment method in which a quantity of data subcarrier groups is reduced by 1 is selected from predetermined signal adjustment methods by using a sorting and combination method. Selected signal adjustment methods are sorted and combined, and a target data signal sequence corresponding to each order and combination is generated. A PAPR corresponding to each target data signal sequence is calculated, and a target data signal sequence corresponding to a minimum PAPR is selected as a data signal sequence of a subsequent data subcarrier group.

Further, a result of the simulated comparison may be locally stored at the transmit end. For example, stored content may include: a serial number of the RU, a quantity of data subcarrier groups in the RU, and a signal adjustment method determined for each data subcarrier group.

In this way, during implementation, before sending a data signal, the transmit end determines a to-be-applied signal adjustment method based on the used RU and the quantity of data subcarrier groups in the RU. Further, the original data signal sequence is adjusted by using the determined signal adjustment method, to obtain a target data signal sequence corresponding to each data subcarrier.

Preferably, the RU used by the transmit end is a frequency-symmetric resource unit. For example, if one RU is selected, the RU may be [-16:-4, 4:16]; if a plurality of RUs are selected, an RU combination may be: {[-95:-70], [70:95]}, {[-68:-43], [43:68]}, {[-42:-17], [17:42]}, {[-121:-70], [70:121]}, {[-68:-17], [17:68]}, {[-121:-96], [-68:-43], [43:68], [96:121]}, {[-121:-96], [-42:-17], [17:42], [96:121]}, or {[-95:-70], [-42:-17], [17:42], [70:95]}. For a signal adjustment method corresponding to each solution, refer to the following description.

The following two technical solutions are selected for more detailed description of this application. The description focuses on implementation processes of step S302 (grouping data subcarriers) and step S303 (determining a data signal sequence for a data subcarrier group) in the foregoing procedure.

Solution 1: A data signal is repeatedly transmitted in frequency domain by using a single RU, and a phase and/or an order of a data signal in a repetition module are/is adjusted, to reduce a PAPR. Solution 2: A data signal is repeatedly transmitted in frequency domain by using a plurality of RUs, and a phase and/or an order of a data signal in a repetition module are/is adjusted, to reduce a PAPR.

The solution 1, to be specific, a method for repeatedly transmitting a data signal by using a single RU, is first described. The solution 1 specifically includes Embodiment 1 to Embodiment 9.

### Embodiment 1

This embodiment is dedicated for an RU including 26 subcarriers, and may be specifically an RU with a subcarrier range of [-121:-96], [-95:-70], [17:42], or [43:68]. For ease of description, each RU is represented by a serial number, namely, an RU 1, an RU 2, an RU 6, or an RU 7 including 26 subcarriers in Table 1.

### Transmit end:

As shown in FIG. 4, such RUs each include two pilot subcarriers, and after the two pilot subcarriers are excluded, 24 data subcarriers may transmit, for four times, a data signal sequence including six data signals. Therefore, every six data subcarriers in the RU are grouped into one group, and a corresponding data signal sequence is set for each data subcarrier group.

The 26 subcarriers in the RU are sorted in ascending order of frequencies, and the pilot subcarriers in the RU are located in a 6^{th} bit and a 20^{th} bit. A data signal sequence transmitted on subcarriers in a 1^{st} bit to a 5^{th} bit and a 7^{th} bit from a low frequency to a high frequency is an original data signal sequence x, and a subsequent data subcarrier group transmits a data signal sequence obtained after adjustment is performed by using any three of the foregoing eight signal adjustment methods. Preferably, a data signal sequence transmitted on subcarriers in an 8^{th} bit to a 13^{th} bit is -x, a data signal sequence transmitted on subcarriers in a 14^{th} bit to a 19^{th} bit is x(end:-1:1), and a data signal sequence transmitted on subcarriers in a 21^{st} bit to a 26^{th} bit is x(end:-1:1).

For ease of description, an array is used to represent each data signal sequence sent by the transmit end, namely, [x, -x, x(end:-1:1), x(end:-1:1)].

### Receive end:

Each of the foregoing data signal sequences is obtained after a transmission frame is received and processed. Preprocessing is performed on the adjusted data signal sequence, specifically including: obtaining negative values of signals received on the subcarriers in the 8^{th} bit to the 13^{th} bit; reversing an order of signals received on the subcarriers in the 14^{th} bit to the 19^{th} bit; and reversing an order of signals received on the subcarriers in the 21^{st} bit to the 26^{th} bit, to obtain the original data signal sequence.

### Embodiment 2

This embodiment is dedicated for an RU including 26 subcarriers, and may be specifically an RU with a subcarrier range of [-68:-43], [-42:-17], [70:95], or [96:121]. For ease of description, each RU is represented by a serial number, namely, an RU 3, an RU 4, an RU 8, or an RU 9 including 26 subcarriers in Table 1.

### Transmit end:

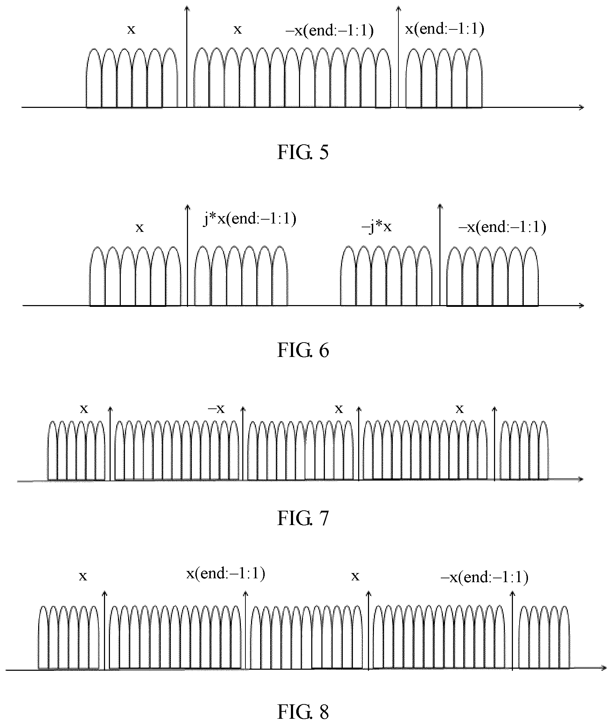

As shown in FIG. 5, such RUs each include two pilot subcarriers, and after the two pilot subcarriers are excluded, 24 data subcarriers may transmit, for four times, a data signal sequence including six data signals. Therefore, every six data subcarriers in the RU are grouped into one group, and a corresponding data signal sequence is set for each data subcarrier group.

The 26 subcarriers in the RU are sorted in ascending order of frequencies, and the pilot subcarriers in the RU are located in a 7^{th} bit and a 21^{st} bit. A data signal sequence transmitted on subcarriers in a 1^{st} bit to a 6^{th} bit from a low frequency to a high frequency is an original data signal sequence x, and a subsequent data subcarrier group transmits a data signal sequence obtained after adjustment is performed by using any three of the foregoing eight signal adjustment methods. Preferably, a data signal sequence transmitted on subcarriers in an 8^{th} bit to a 13^{th} bit is x, a data signal sequence transmitted on subcarriers in a 14^{th} bit to a 19^{th} bit is -x(end:-1:1), and a data signal sequence transmitted on subcarriers in a 20^{th} bit and a 22^{nd} bit to a 26^{th} bit is x(end:-1:1).

For ease of description, an array is used to represent each data signal sequence sent by the transmit end, namely, [x, x, -x(end:-1:1), x(end:-1:1)].

### Receive end:

Each of the foregoing data signal sequences is obtained after a transmission frame is received and processed. Preprocessing is performed on the adjusted data signal sequence, specifically including: reversing an order of and obtaining negative values of signals received on the sub carriers in the 14^{th} bit to the 19^{th} bit; and reversing an order of signals received on the subcarriers in the 20^{th} bit and the 22^{nd} bit to the 26^{th} bit, to obtain the original data signal sequence.

### Embodiment 3

This embodiment is dedicated for an RU including 26 subcarriers, and may be specifically an RU with a subcarrier range of [-16:-4, 4:16]. For ease of description, the RU is represented by a serial number, namely, an RU 5 including 26 subcarriers in Table 1.

### Transmit end:

As shown in FIG. 6, such the RU includes two pilot subcarriers, and after the two pilot subcarriers are excluded, 24 data subcarriers may transmit, for four times, a data signal sequence including six data signals. Therefore, every six data subcarriers in the RU are grouped into one group, and a corresponding data signal sequence is set for each data subcarrier group.

The 26 subcarriers in the RU are sorted in ascending order of frequencies, and the pilot subcarriers in the RU are located in a 7^{th} bit and a 27^{th} bit (a subcarrier in [-4, 4] excluded in [-16:-4, 4:16] is a direct current subcarrier with a subcarrier serial number, and therefore a second pilot subcarrier is located in the 27^{th} bit). A data signal sequence transmitted on subcarriers in a 1^{st} bit to a 6^{th} bit from a low frequency to a high frequency is an original data signal sequence x, and a subsequent data subcarrier group transmits a data signal sequence obtained after adjustment is performed by using any three of the foregoing eight signal adjustment methods. Preferably, a data signal sequence transmitted on subcarriers in an 8^{th} bit to a 13^{th} bit is j^{∗}x(end:-1:1), a data signal sequence transmitted on subcarriers in a 21^{st} bit to a 26^{th} bit is -j^{∗}x, and a data signal sequence transmitted on subcarriers in a 28^{th} bit to a 33^{rd} bit is -x(end:-1:1).

For ease of description, an array is used to represent each data signal sequence sent by the transmit end, namely, [x, j^{∗}x(end:-1:1), -j^{∗}x, -x(end:-1:1)].

### Receive end:

Each of the foregoing data signal sequences is obtained after a transmission frame is received and processed. Preprocessing is performed on the adjusted data signal sequence, specifically including: multiplying signals received on the subcarriers in the 8^{th} bit to the 13^{th} bit by -j, and obtaining a reverse order; multiplying signals received on the subcarriers in the 21^{st} bit to the 26^{th} bit by j; and reversing an order of and obtaining negative values of signals received on the subcarriers in the 28^{th} bit to the 33^{rd} bit, to obtain the original data signal sequence.

### Embodiment 4

This embodiment is dedicated for an RU including 52 subcarriers, and may be specifically an RU with a subcarrier range of [-121:-70]. For ease of description, the RU is represented by a serial number, namely, an RU 1 including 52 subcarriers in Table 1.

### Transmit end:

As shown in FIG. 7, such the RU includes four pilot subcarriers, and after the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

The 52 subcarriers in the RU are sorted in ascending order of frequencies, and the pilot subcarriers in the RU are located in a 6^{th} bit, a 20^{th} bit, a 32^{nd} bit, and a 46^{th} bit. A data signal sequence transmitted on subcarriers in a 1^{st} bit to a 5^{th} bit and a 7^{th} bit to a 13^{th} bit from a low frequency to a high frequency is an original data signal sequence x, and a subsequent data subcarrier group transmits a data signal sequence obtained after adjustment is performed by using any three of the foregoing eight signal adjustment methods. Preferably, a data signal sequence transmitted on subcarriers in a 14^{th} bit to a 19^{th} bit and a 21^{st} bit to a 26^{th} bit is -x, a data signal sequence transmitted on subcarriers in a 27^{th} bit to a 31^{st} bit and a 33^{rd} bit to a 39^{th} bit is x, and a data signal sequence transmitted on subcarriers in a 40^{th} bit to a 45^{th} bit and a 47^{th} bit to a 52^{nd} bit is x.

For ease of description, an array is used to represent each data signal sequence sent by the transmit end, namely, [x, -x, x, x].

### Receive end:

Each of the foregoing data signal sequences is obtained after a transmission frame is received and processed. Preprocessing is performed on the adjusted data signal sequence, specifically including: obtaining negative values of signals received on the subcarriers in the 14^{th} bit to the 19^{th} bit and the 21^{st} bit to the 26^{th} bit, to obtain the original data signal sequence.

### Embodiment 5

This embodiment is dedicated for an RU including 52 subcarriers, and may be specifically an RU with a subcarrier range of [17:68]. For ease of description, the RU is represented by a serial number, namely, an RU 3 including 52 subcarriers in Table 1.

### Transmit end:

As shown in FIG. 8, such the RU includes four pilot subcarriers, and after the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

The 52 subcarriers in the RU are sorted in ascending order of frequencies, and the pilot subcarriers in the RU are located in a 6^{th} bit, a 20^{th} bit, a 32^{nd} bit, and a 46^{th} bit. A data signal sequence transmitted on subcarriers in a 1^{st} bit to a 5^{th} bit and a 7^{th} bit to a 13^{th} bit from a low frequency to a high frequency is an original data signal sequence x, and a subsequent data subcarrier group transmits a data signal sequence obtained after adjustment is performed by using any three of the foregoing eight signal adjustment methods. Preferably, a data signal sequence transmitted on subcarriers in a 14^{th} bit to a 19^{th} bit and a 21^{st} bit to a 26^{th} bit is x(end:-1:1), a data signal sequence transmitted on subcarriers in a 27^{th} bit to a 31^{st} bit and a 33^{rd} bit to a 39^{th} bit is x, and a data signal sequence transmitted on subcarriers in a 40^{th} bit to a 45^{th} bit and a 47^{th} bit to a 52^{nd} bit is -x(end:-1:1).

For ease of description, an array is used to represent each data signal sequence sent by the transmit end, namely, [x, x(end:-1:1), x, -x(end:-1:1)].

### Receive end:

Each of the foregoing data signal sequences is obtained after a transmission frame is received and processed. Preprocessing is performed on the adjusted data signal sequence, specifically including: reversing an order of signals received on the subcarriers in the 14^{th} bit to the 19^{th} bit and the 21^{st} bit to the 26^{th} bit; and reversing an order of and obtaining negative values of signals received on the subcarriers in the 40^{th} bit to the 45^{th} bit and the 47^{th} bit to the 52^{nd} bit, to obtain the original data signal sequence.

### Embodiment 6

This embodiment is dedicated for an RU including 52 subcarriers, and may be specifically an RU with a subcarrier range of [-68:-17]. For ease of description, the RU is represented by a serial number, namely, an RU 2 including 52 subcarriers in Table 1.

### Transmit end:

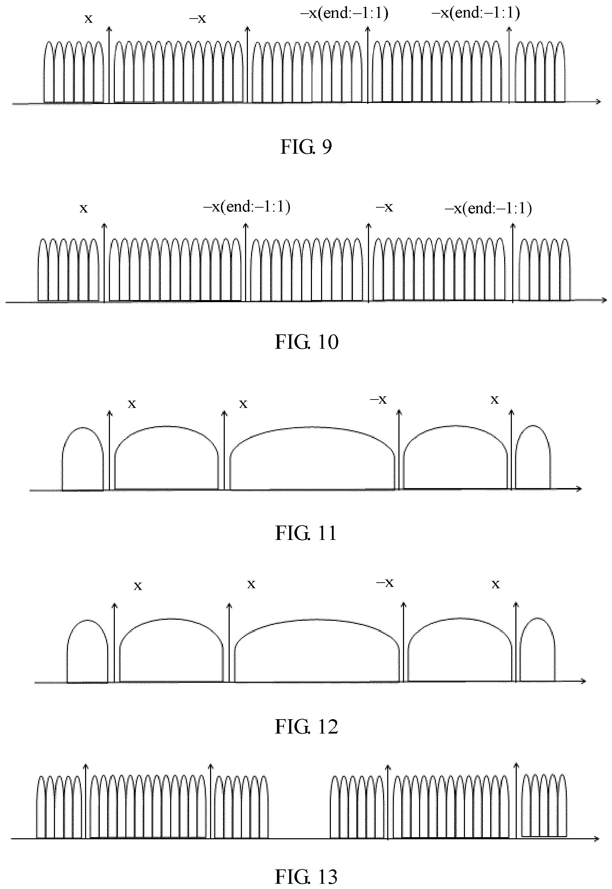

As shown in FIG. 9, such the RU includes four pilot subcarriers, and after the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

The 52 subcarriers in the RU are sorted in ascending order of frequencies, and the pilot subcarriers in the RU are located in a 7^{th} bit, a 21^{st} bit, a 33^{rd} bit, and a 47^{th} bit. A data signal sequence transmitted on subcarriers in a 1^{st} bit to a 6^{th} bit and an 8^{th} bit to a 13^{th} bit from a low frequency to a high frequency is an original data signal sequence x, and a subsequent data subcarrier group transmits a data signal sequence obtained after adjustment is performed by using any three of the foregoing eight signal adjustment methods. Preferably, a data signal sequence transmitted on subcarriers in a 14^{th} bit to a 20^{th} bit and a 22^{st} bit to a 26^{th} bit is -x, a data signal sequence transmitted on subcarriers in a 27^{th} bit to a 32^{st} bit and a 34^{rd} bit to a 39^{th} bit is -x(end:-1:1), and a data signal sequence transmitted on subcarriers in a 40^{th} bit to a 46^{th} bit and a 48^{th} bit to a 52^{nd} bit is -x(end:-1:1).

For ease of description, an array is used to represent each data signal sequence sent by the transmit end, namely, [x, -x, -x(end:-1:1), -x(end:-1:1)].

### Receive end:

Each of the foregoing data signal sequences is obtained after a transmission frame is received and processed. Preprocessing is performed on the adjusted data signal sequence, specifically including: obtaining negative values of signals received on the subcarriers in the 14^{th} bit to the 20^{th} bit and the 22^{nd} bit to the 26^{th} bit; reversing an order of and obtaining negative values of signals received on the subcarriers in the 27^{th} bit to the 32^{nd} bit and the 34^{th} bit to the 39^{th} bit; and reversing an order of and obtaining negative values of signals received on the subcarriers in the 40^{th} bit to the 46^{th} bit and the 48^{th} bit to the 52^{nd} bit, to obtain the original data signal sequence.

### Embodiment 7

This embodiment is dedicated for an RU including 52 subcarriers, and may be specifically an RU with a subcarrier range of [70:121]. For ease of description, the RU is represented by a serial number, namely, an RU 4 including 52 subcarriers in Table 1.

### Transmit end:

As shown in FIG. 10, such the RU includes four pilot subcarriers, and after the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

The 52 subcarriers in the RU are sorted in ascending order of frequencies, and the pilot subcarriers in the RU are located in a 7^{th} bit, a 21^{st} bit, a 33^{rd} bit, and a 47^{th} bit. A data signal sequence transmitted on subcarriers in a 1^{st} bit to a 6^{th} bit and an 8^{th} bit to a 13^{th} bit from a low frequency to a high frequency is an original data signal sequence x, and a subsequent data subcarrier group transmits a data signal sequence obtained after adjustment is performed by using any three of the foregoing eight signal adjustment methods. Preferably, a data signal sequence transmitted on subcarriers in a 14^{th} bit to a 20^{th} bit and a 22^{nd} bit to a 26^{th} bit is -x(end:-1:1), a data signal sequence transmitted on subcarriers in a 27^{th} bit to a 32^{nd} bit and a 34^{th} bit to a 39^{th} bit is -x, and a data signal sequence transmitted on subcarriers in a 40^{th} bit to a 46^{th} bit and a 48^{th} bit to a 52^{nd} bit is -x(end:-1:1).

For ease of description, an array is used to represent each data signal sequence sent by the transmit end, namely, [x, -x(end:-1:1), -x, -x(end:-1:1)].

### Receive end:

Each of the foregoing data signal sequences is obtained after a transmission frame is received and processed. Preprocessing is performed on the adjusted data signal sequence, specifically including: reversing an order of and obtaining negative values of signals received on the subcarriers in the 14^{th} bit to the 20^{th} bit and the 22^{nd} bit to the 26^{th} bit; obtaining negative values of signals received on the subcarriers in the 27^{th} bit to the 32^{nd} bit and the 34^{th} bit to the 39^{th} bit; and reversing an order of and obtaining negative values of signals received on the subcarriers in the 40^{th} bit to the 46^{th} bit and the 48^{th} bit to the 52^{nd} bit, to obtain the original data signal sequence.

### Embodiment 8

This embodiment is dedicated for an RU including 106 subcarriers, and may be specifically an RU with a subcarrier range of [-122:-17]. For ease of description, the RU is represented by a serial number, namely, an RU 1 including 106 subcarriers in Table 1.

### Transmit end:

As shown in FIG. 11, such the RU includes four pilot subcarriers, and after the four pilot subcarriers and data subcarriers in a 53^{rd} bit and a 54^{th} bit are excluded, 100 data subcarriers may transmit, for four times, a data signal sequence including 25 data signals. Therefore, every 25 data subcarriers in the RU are grouped into one group, and a corresponding data signal sequence is set for each data subcarrier group.

The 106 subcarriers in the RU are sorted in ascending order of frequencies, and the pilot subcarriers in the RU are located in a 7^{th} bit, a 33^{rd} bit, a 75^{th} bit, and a 101^{st} bit. A data signal sequence transmitted on subcarriers in a 1^{st} bit to a 6^{th} bit and an 8^{th} bit to a 26^{th} bit from a low frequency to a high frequency is an original data signal sequence x, and a subsequent data subcarrier group transmits a data signal sequence obtained after adjustment is performed by using any three of the foregoing eight signal adjustment methods. Preferably, a data signal sequence transmitted on subcarriers in a 27^{th} bit to a 32^{nd} bit and a 34^{th} bit to a 52^{nd} bit is x, a data signal sequence transmitted on subcarriers in a 55^{th} bit to a 74^{th} bit and a 76^{th} bit to an 80^{th} bit is -x, and a data signal sequence transmitted on subcarriers in an 81^{st} bit to a 100^{th} bit and a 102^{nd} bit to a 106^{th} bit is x.

For ease of description, an array is used to represent each data signal sequence sent by the transmit end, namely, [x, x, -x, x].

### Receive end:

Each of the foregoing data signal sequences is obtained after a transmission frame is received and processed. Preprocessing is performed on the adjusted data signal sequence, specifically including: obtaining negative values of signals received on the subcarriers in the 55^{th} bit to the 74^{th} bit and the 76^{th} bit to the 80^{th} bit, to obtain the original data signal sequence.

### Embodiment 9

This embodiment is dedicated for an RU including 106 subcarriers, and may be specifically an RU with a subcarrier range of [17:122]. For ease of description, the RU is represented by a serial number, namely, an RU 2 including 106 subcarriers in Table 1.

### Transmit end:

As shown in FIG. 12, such the RU includes four pilot subcarriers, and after the four pilot subcarriers and data subcarriers in a 53^{rd} bit and a 54^{th} bit are excluded, 100 data subcarriers may transmit, for four times, a data signal sequence including 25 data signals. Therefore, every 25 data subcarriers in the RU are grouped into one group, and a corresponding data signal sequence is set for each data subcarrier group.

The 106 subcarriers in the RU are sorted in ascending order of frequencies, and the pilot subcarriers in the RU are located in a 6^{th} bit, a 32^{nd} bit, a 74^{th} bit, and a 100^{th} bit. A data signal sequence transmitted on subcarriers in a 1^{st} bit to a 5^{th} bit and a 7^{th} bit to a 26^{th} bit from a low frequency to a high frequency is an original data signal sequence x, and a subsequent data subcarrier group transmits a data signal sequence obtained after adjustment is performed by using any three of the foregoing eight signal adjustment methods. Preferably, a data signal sequence transmitted on subcarriers in a 27^{th} bit to a 31^{st} bit and a 33^{rd} bit to a 52^{nd} bit is x, a data signal sequence transmitted on subcarriers in a 55^{th} bit to a 73^{rd} bit and a 75^{th} bit to an 80^{th} bit is -x, and a data signal sequence transmitted on subcarriers in an 81^{st} bit to a 99^{th} bit and a 101^{st} bit to a 106^{th} bit is x.

For ease of description, an array is used to represent each data signal sequence sent by the transmit end, namely, [x, x, -x, x].

### Receive end:

Each of the foregoing data signal sequences is obtained after a transmission frame is received and processed. Preprocessing is performed on the adjusted data signal sequence, specifically including: obtaining negative values of signals received on the subcarriers in the 55^{th} bit to the 73^{rd} bit and the 75^{th} bit to the 80^{th} bit, to obtain the original data signal sequence.

The following describes the solution 2, to be specific, a method for repeatedly transmitting a data signal by using a plurality of RUs.

A quantity of times for which repeated transmission is performed is determined based on a total quantity of data subcarriers in the plurality of RUs and a quantity of data signals in a data signal sequence. Alternatively, a quantity of data signals in a data signal sequence is determined based on a total quantity of data subcarriers in the plurality of RUs and a quantity of times for which repeated transmission is performed.

The data subcarriers in the plurality of RUs are sorted in ascending order or descending order of frequencies, and the sorted data subcarriers are sequentially grouped based on the quantity of the data signals included in the data signal sequence, to obtain a data subcarrier group. A to-be-transmitted data signal sequence is determined for each data subcarrier group.

Specifically, the solution 2 includes the following Embodiment 10 to Embodiment 17. It should be noted that in a same embodiment, different RU combination manners may be used, but grouping of data subcarriers is the same.

### Embodiment 10

### Transmit end:

This embodiment is dedicated for two RUs including 26 subcarriers each, and frequency ranges of data subcarriers of the two RUs are different. As shown in FIG. 13, subcarriers of each RU are sorted in ascending order of frequencies. Pilot subcarriers in an RU with a lower frequency are located in a 6^{th} bit and a 20^{th} bit, and pilot subcarriers in an RU with a higher frequency are located in a 7^{th} bit and a 21^{st} bit.

After the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 5^{th} bit and a 7^{th} bit to a 13^{th} bit are grouped into a first data subcarrier group, subcarriers in a 14^{th} bit to a 19^{th} bit and a 21^{st} bit to a 26^{th} bit are grouped into a second data subcarrier group; and in the RU with the higher frequency, subcarriers in a 1^{st} bit to a 6^{th} bit and an 8^{th} bit to a 13^{th} bit are grouped into a third data subcarrier group, subcarriers in a 14^{th} bit to a 20^{th} bit and a 22^{nd} bit to a 26^{th} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-121:-96], [-68:-43]}, a sent data signal sequence is [x, x(end:-1:1), x, -x(end:-1:1)]; if an RU combination is {[-121:-96], [-42:-17]}, a sent data signal sequence is [x, x, x, -x]; if an RU combination is {[-121:-96], [70:95]}, a sent data signal sequence is [x, -x, -x, -x]; if an RU combination is {[-121:-96], [96:121]}, a sent data signal sequence is [x, x, x, -x]; if an RU combination is {[-95:-70], [-68:-43]}, a sent data signal sequence is [x, x, x, -x]; if an RU combination is {[-95:-70], [-42:-17]}, a sent data signal sequence is [x, -x, -x, -x]; if an RU combination is {[-95:-70], [70:95]}, a sent data signal sequence is [x, -x, -x, -x]; if an RU combination is {[-95:-70], [96:121]}, a sent data signal sequence is [x, x, x, -x]; if an RU combination is {[17:42], [70:95]}, a sent data signal sequence is [x, j^{∗}x(end:-1:1), -j^{∗}x, -x(end:-1:1)]; if an RU combination is {[17:42], [96:121]}, a sent data signal sequence is [x, -x, -x, -x]; if an RU combination is {[43:68], [70:95]}, a sent data signal sequence is [x, x, x, -x]; if an RU combination is {[43:68], [96:121]}, a sent data signal sequence is [x, j^{∗}x(end:-1:1), -j^{∗}x, -x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 11

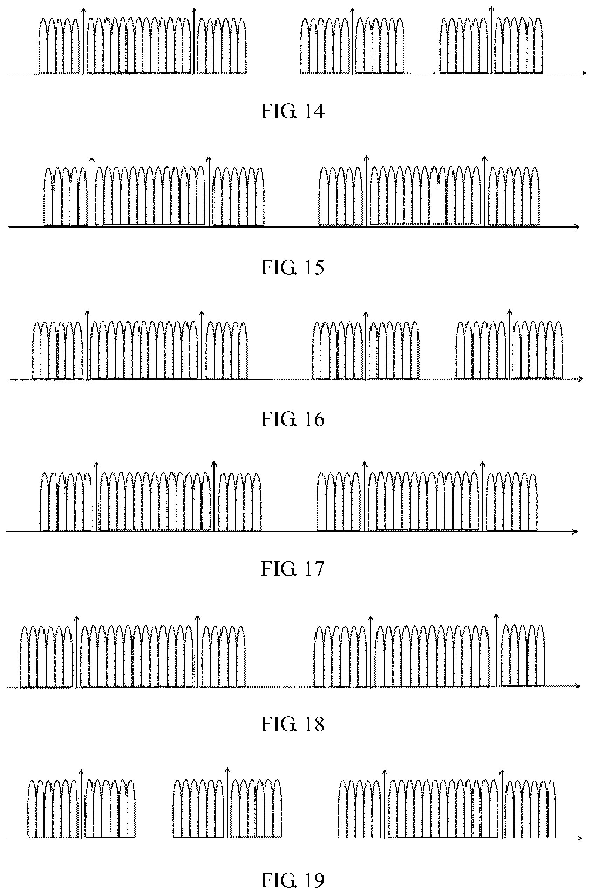

This embodiment is dedicated for two RUs including 26 subcarriers each, and frequency ranges of data subcarriers of the two RUs are different. As shown in FIG. 14, subcarriers of each RU are sorted in ascending order of frequencies. Pilot subcarriers in an RU with a lower frequency are located in a 6^{th} bit and a 20^{th} bit, and pilot subcarriers in an RU with a higher frequency are located in a 7^{th} bit and a 27^{th} bit.

After the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 5^{th} bit and a 7^{th} bit to a 13^{th} bit are grouped into a first data subcarrier group, subcarriers in a 14^{th} bit to a 19^{th} bit and a 21^{st} bit to a 26^{th} bit are grouped into a second data subcarrier group; and in the RU with the higher frequency, subcarriers in a 1^{st} bit to a 6^{th} bit and an 8^{th} bit to a 13^{th} bit are grouped into a third data subcarrier group, subcarriers in a 21^{st} bit to a 26^{th} bit and a 28^{th} bit to a 33^{rd} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-121:-96], [-16:-4, 4:16]}, a sent data signal sequence is [x, x(end:-1:1), x(end:-1:1), -x(end:-1:1)]; or if an RU combination is {[-95:-70], [-16:16]}, a sent data signal sequence is [x, x(end:-1:1), x(end:-1:1), -x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 12

This embodiment is dedicated for two RUs including 26 subcarriers each, and frequency ranges of data subcarriers of the two RUs are different. As shown in FIG. 15, subcarriers of each RU are sorted in ascending order of frequencies. Pilot subcarriers in an RU with a lower frequency are located in a 6^{th} bit and a 20^{th} bit, and pilot subcarriers in an RU with a higher frequency are located in a 6^{th} bit and a 20^{th} bit.

After the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 5^{th} bit and a 7^{th} bit to a 13^{th} bit are grouped into a first data subcarrier group, subcarriers in a 14^{th} bit to a 19^{th} bit and a 21^{st} bit to a 26^{th} bit are grouped into a second data subcarrier group; and in the RU with the higher frequency, subcarriers in a 1^{st} bit to a 5^{th} bit and a 7^{th} bit to a 13^{th} bit are grouped into a third data subcarrier group, subcarriers in a 14^{th} bit to a 19^{th} bit and a 21^{st} bit to a 26^{th} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-121:-96], [17:42]}, a sent data signal sequence is [x, -x, x(end:-1:1), x(end:-1:1)]; if an RU combination is {[-121:-96], [43:68]}, a sent data signal sequence is [x, x, x(end:-1:1), -x(end:-1:1)]; if an RU combination is {[-95:-70], [17:42]}, a sent data signal sequence is [x, -x, x(end:-1:1), x(end:-1:1)]; or if an RU combination is {[-95:-70], [43:68]}, a sent data signal sequence is [x, x, x(end:-1:1), -x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 13

This embodiment is dedicated for two RUs including 26 subcarriers each, and frequency ranges of data subcarriers of the two RUs are different. As shown in FIG. 16, subcarriers of each RU are sorted in ascending order of frequencies. Pilot subcarriers in an RU with a lower frequency are located in a 7^{th} bit and a 21^{st} bit, and pilot subcarriers in an RU with a higher frequency are located in a 7^{th} bit and a 21^{st} bit.

After the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 6^{th} bit and an 8^{th} bit to a 13^{th} bit are grouped into a first data subcarrier group, subcarriers in a 14^{th} bit to a 20^{th} bit and a 22^{nd} bit to a 26^{th} bit are grouped into a second data subcarrier group; and in the RU with the higher frequency, subcarriers in a 1^{st} bit to a 6^{th} bit and an 8^{th} bit to a 13^{th} bit are grouped into a third data subcarrier group, subcarriers in a 21^{st} bit to a 26^{th} bit and a 28^{th} bit to a 33^{rd} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-68:-43], [-16:-4, 4:16]}, a sent data signal sequence is [x, -x(end:-1:1), -x, x]; or if an RU combination is {[-42:-17], [-16:-4, 4:16]}, a sent data signal sequence is [x, x, -x, -x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 14

This embodiment is dedicated for two RUs including 26 subcarriers each, and frequency ranges of data subcarriers of the two RUs are different. As shown in FIG. 17, subcarriers of each RU are sorted in ascending order of frequencies. Pilot subcarriers in an RU with a lower frequency are located in a 7^{th} bit and a 21^{st} bit, and pilot subcarriers in an RU with a higher frequency are located in a 6^{th} bit and a 20^{th} bit.

After the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 6^{th} bit and an 8^{th} bit to a 13^{th} bit are grouped into a first data subcarrier group, subcarriers in a 14^{th} bit to a 20^{th} bit and a 22^{nd} bit to a 26^{th} bit are grouped into a second data subcarrier group; and in the RU with the higher frequency, subcarriers in a 1^{st} bit to a 5^{th} bit and a 7^{th} bit to a 13^{th} bit are grouped into a third data subcarrier group, subcarriers in a 14^{th} bit to a 19^{th} bit and a 21^{st} bit to a 26^{th} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-68:-43], [17:42]}, a sent data signal sequence is [x, x, -x, x]; if an RU combination is {[-68:-43], [43:68]}, a sent data signal sequence is [x, x, -x, x]; if an RU combination is {[-42:-17], [17:42]}, a sent data signal sequence is [x, j^{∗}x(end:-1:1), -j^{∗}x, -x(end:-1:1)]; or if an RU combination is {[-42:-17], [43:68]}, a sent data signal sequence is [x, -x, x, x].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 15

This embodiment is dedicated for two RUs including 26 subcarriers each, and frequency ranges of data subcarriers of the two RUs are different. As shown in FIG. 18, subcarriers of each RU are sorted in ascending order of frequencies. Pilot subcarriers in an RU with a lower frequency are located in a 7^{th} bit and a 21^{st} bit, and pilot subcarriers in an RU with a higher frequency are located in a 7^{th} bit and a 21^{st} bit.

After the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 6^{th} bit and an 8^{th} bit to a 13^{th} bit are grouped into a first data subcarrier group, subcarriers in a 14^{th} bit to a 20^{th} bit and a 22^{nd} bit to a 26^{th} bit are grouped into a second data subcarrier group; and in the RU with the higher frequency, subcarriers in a 1^{st} bit to a 6^{th} bit and an 8^{th} bit to a 13^{th} bit are grouped into a third data subcarrier group, subcarriers in a 14^{th} bit to a 20^{th} bit and a 22^{nd} bit to a 26^{th} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-68:-43], [70:95]}, the sent data signal sequence is [x, x, -x(end:-1:1), x(end:-1:1)]; if an RU combination is {[-68:-43], [96:121]}, a sent data signal sequence is [x, -x, -x(end:-1:1), -x(end:-1:1)]; if an RU combination is {[-42:-17], [70:95]}, a sent data signal sequence is [x, -x, -x(end:-1:1), -x(end:-1:1)]; or if an RU combination is {[-42:-17], [96:121]}, a sent data signal sequence is [x, x, -x(end:-1:1), x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 16

This embodiment is dedicated for two RUs including 26 subcarriers each, and frequency ranges of data subcarriers of the two RUs are different. As shown in FIG. 19, subcarriers of each RU are sorted in ascending order of frequencies. Pilot subcarriers in an RU with a lower frequency are located in a 7^{th} bit and a 27^{th} bit, and pilot subcarriers in an RU with a higher frequency are located in a 6^{th} bit and a 20^{th} bit.

After the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 6^{th} bit and an 8^{th} bit to a 13^{th} bit are grouped into a first data subcarrier group, subcarriers in a 21^{st} bit to a 26^{th} bit and a 28^{th} bit to a 33^{rd} bit are grouped into a second data subcarrier group; and in the RU with the higher frequency, subcarriers in a 1^{st} bit to a 5^{th} bit and a 7^{th} bit to a 13^{th} bit are grouped into a third data subcarrier group, subcarriers in a 14^{th} bit to a 19^{th} bit and a 21^{st} bit to a 26^{th} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-16:-4, 4:16], [17:42]}, a sent data signal sequence is [x, x(end:-1:1), -x(end:-1:1), -x(end:-1:1)]; or if an RU combination is {[-16:-4, 4:16], [43:68]}, a sent data signal sequence is [x, x, x, -x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 17

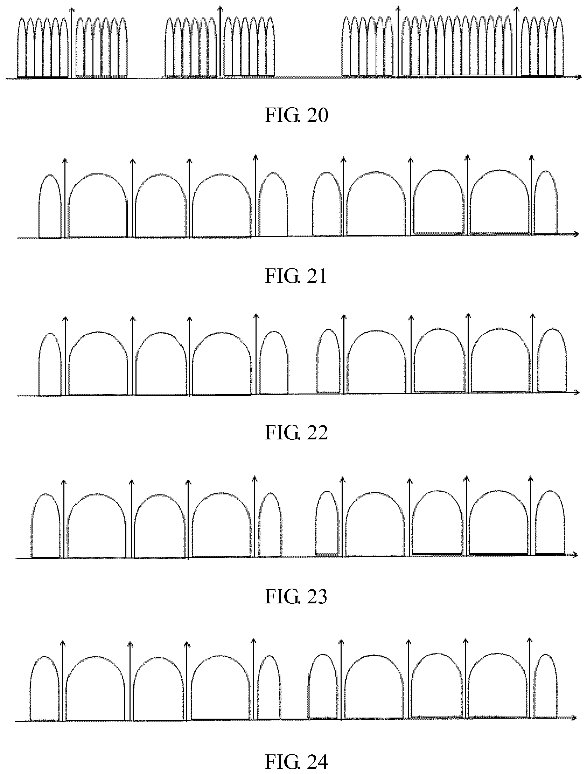

This embodiment is dedicated for two RUs including 26 subcarriers each, and frequency ranges of data subcarriers of the two RUs are different. As shown in FIG. 20, subcarriers of each RU are sorted in ascending order of frequencies. Pilot subcarriers in an RU with a lower frequency are located in a 7^{th} bit and a 27^{th} bit, and pilot subcarriers in an RU with a higher frequency are located in a 7^{th} bit and a 21^{st} bit.

After the four pilot subcarriers are excluded, 48 data subcarriers may transmit, for four times, a data signal sequence including 12 data signals. Therefore, every 12 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 6^{th} bit and an 8^{th} bit to a 13^{th} bit are grouped into a first data subcarrier group, subcarriers in a 21^{st} bit to a 26^{th} bit and a 28^{th} bit to a 33^{rd} bit are grouped into a second data subcarrier group; and in the RU with the higher frequency, subcarriers in a 1^{st} bit to a 6^{th} bit and an 8^{th} bit to a 13^{th} bit are grouped into a third data subcarrier group, subcarriers in a 14^{th} bit to a 20^{th} bit and a 22^{nd} bit to a 26^{th} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-16-4, 4:16], [70:95]}, a sent data signal sequence is [x, -x, -x, x(end:-1:1)]; or if an RU combination is {[-16:-4, 4:16], [96:121]}, a sent data signal sequence is [x, -x, -x, x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 18

This embodiment is dedicated for two RUs including 52 subcarriers each, and frequency ranges of data subcarriers of the two RUs are different. As shown in FIG. 21, subcarriers of each RU are sorted in ascending order of frequencies. Pilot subcarriers in an RU with a lower frequency are located in a 6^{th} bit, a 20^{th} bit, a 32^{nd} bit, and a 46^{th} bit, and pilot subcarriers in an RU with a higher frequency are located in a 6^{th} bit, a 20^{th} bit, a 32^{nd} bit, and a 46^{th} bit.

After the eight pilot subcarriers are excluded, 96 data subcarriers may transmit, for four times, a data signal sequence including 24 data signals. Therefore, every 24 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 5^{th} bit, a 7^{th} bit to a 19^{th} bit, and a 21^{st} bit to a 26^{th} bit are grouped into a first data subcarrier group, subcarriers in a 27^{th} bit to a 31^{st} bit, a 33^{rd} bit to a 45^{th} bit, and a 47^{th} bit to a 52^{nd} bit are grouped into a second data subcarrier group; and in the RU with the higher frequency, subcarriers in a 1^{st} bit to a 5^{th} bit, a 7^{th} bit to a 19^{th} bit, and a 21^{st} bit to a 26^{th} bit are grouped into a third data subcarrier group, subcarriers in a 27^{th} bit to a 31^{st} bit, a 33^{rd} bit to a 45^{th} bit, and a 47^{th} bit to a 52^{nd} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-121-70], [17:68]}, a sent data signal sequence is [x, x(end:-1:1), -x, x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 19

This embodiment is dedicated for two RUs including 52 subcarriers each, and frequency ranges of data subcarriers of the two RUs are different. As shown in FIG. 22, subcarriers of each RU are sorted in ascending order of frequencies. Pilot subcarriers in an RU with a lower frequency are located in a 6^{th} bit, a 20^{th} bit, a 32^{nd} bit, and a 46^{th} bit, and pilot subcarriers in an RU with a higher frequency are located in a 7^{th} bit, a 21^{st} bit, a 33^{rd} bit, and a 47^{th} bit.

After the eight pilot subcarriers are excluded, 96 data subcarriers may transmit, for four times, a data signal sequence including 24 data signals. Therefore, every 24 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 5^{th} bit, a 7^{th} bit to a 19^{th} bit, and a 21^{st} bit to a 26^{th} bit are grouped into a first data subcarrier group, subcarriers in a 27^{th} bit to a 31^{st} bit, a 33^{rd} bit to a 45^{th} bit, and a 47^{th} bit to a 52^{nd} bit are grouped into a second data subcarrier group; and in the RU with the higher frequency, subcarriers in a 1^{st} bit to a 6^{th} bit, an 8^{th} bit to a 20^{th} bit, and a 22^{nd} bit to a 26^{th} bit are grouped into a third data subcarrier group, subcarriers in a 27^{th} bit to a 32^{nd} bit, a 34^{th} bit to a 46^{th} bit, and a 48^{th} bit to a 52^{nd} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-121-70], [70:121]}, a sent data signal sequence is [x, -x, -x, -x].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 20

This embodiment is dedicated for two RUs including 52 subcarriers each, and frequency ranges of data subcarriers of the two RUs are different. As shown in FIG. 23, subcarriers of each RU are sorted in ascending order of frequencies. Pilot subcarriers in an RU with a lower frequency are located in a 7^{th} bit, a 21^{st} bit, a 33^{rd} bit, and a 47^{th} bit, and pilot subcarriers in an RU with a higher frequency are located in a 6^{th} bit, a 20^{th} bit, a 32^{nd} bit, and a 46^{th} bit.

After the eight pilot subcarriers are excluded, 96 data subcarriers may transmit, for four times, a data signal sequence including 24 data signals. Therefore, every 24 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 6^{th} bit, an 8^{th} bit to a 20^{th} bit, and a 22^{nd} bit to a 26^{th} bit are grouped into a first data subcarrier group, subcarriers in a 27^{th} bit to a 32^{nd} bit, a 34^{th} bit to a 46^{th} bit, and a 48^{th} bit to a 52^{nd} bit are grouped into a second data subcarrier group; and in the RU with the higher frequency, subcarriers a 1^{st} bit to a 5^{th} bit, a 7^{th} bit to a 19^{th} bit, and a 21^{st} bit to a 26^{th} bit are grouped into a third data subcarrier group, subcarriers in a 27^{th} bit to a 31^{st} bit, a 33^{rd} bit to a 45^{th} bit, and a 47^{th} bit to a 52^{nd} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-68:-17], [17:68]}, a sent data signal sequence is [x, -x, -x(end:-1:1), -x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 21

This embodiment is dedicated for two RUs including 52 subcarriers each, and frequency ranges of data subcarriers of the two RUs are different. As shown in FIG. 24, subcarriers of each RU are sorted in ascending order of frequencies. Pilot subcarriers in an RU with a lower frequency are located in a 7^{th} bit, a 21^{st} bit, a 33^{rd} bit, and a 47^{th} bit, and pilot subcarriers in an RU with a higher frequency are located in a 7^{th} bit, a 21^{st} bit, a 33^{rd} bit, and a 47^{th} bit.

After the eight pilot subcarriers are excluded, 96 data subcarriers may transmit, for four times, a data signal sequence including 24 data signals. Therefore, every 24 data subcarriers in the RU are grouped into one group, and a corresponding data signal sequence is set for each data subcarrier group.

A specific grouping situation is as follows: From a low frequency to a high frequency, in the RU with the lower frequency, subcarriers in a 1^{st} bit to a 6^{th} bit, an 8^{th} bit to a 20^{th} bit, and a 22^{nd} bit to a 26^{th} bit are grouped into a first data subcarrier group, subcarriers in a 27^{th} bit to a 32^{nd} bit, a 34^{th} bit to a 46^{th} bit, and a 48^{th} bit to a 52^{nd} bit are grouped into a second data subcarrier group; and in the RU with the higher frequency, subcarriers in a 1^{st} bit to a 6^{th} bit, an 8^{th} bit to a 20^{th} bit, and a 22^{nd} bit to a 26^{th} bit are grouped into a third data subcarrier group, subcarriers in a 27^{th} bit to a 32^{nd} bit, a 34^{th} bit to a 46^{th} bit, and a 48^{th} bit to a 52^{nd} bit are grouped into a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-68:-17], [70:121]}, a sent data signal sequence is [x, x(end:-1:1), x, -x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 22

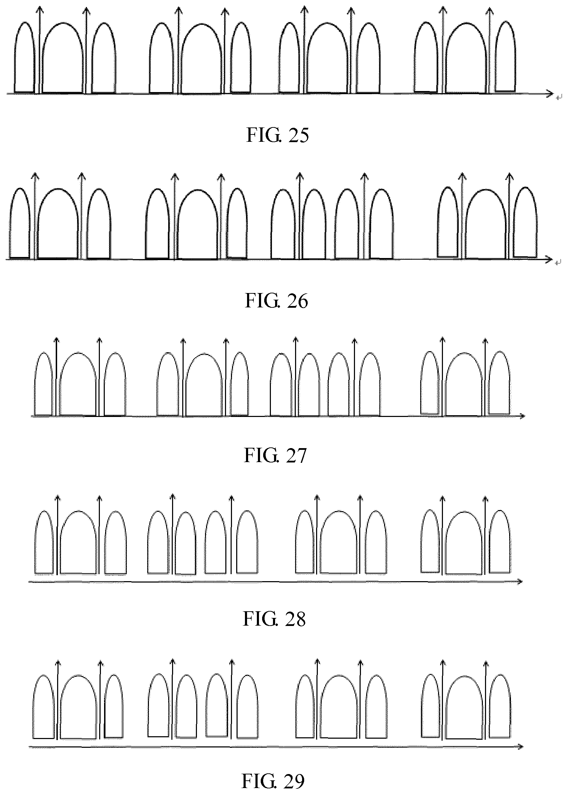

This embodiment is dedicated for four RUs including 26 subcarriers each, and frequency ranges of data subcarriers of the four RUs are different. As shown in FIG. 25, subcarriers of each RU are sorted in ascending order of frequencies, pilot subcarriers in a first RU are located in a 6^{th} bit and a 20^{th} bit, pilot subcarriers in a second RU are located in a 7^{th} bit and a 21^{st} bit, pilot subcarriers in a third RU are located in a 6^{th} bit and a 20^{th} bit, and pilot subcarriers in a fourth RU are located in a 7^{th} bit and a 21^{st} bit.

After the eight pilot subcarriers are excluded, 96 data subcarriers may transmit, for four times, a data signal sequence including 24 data signals. There are 24 data subcarriers remained in each RU after pilot subcarriers are excluded. Therefore, each RU from which the pilot subcarriers are excluded may be used as one subcarrier group, and a corresponding data signal sequence may be set.

A specific grouping situation is as follows: From a low frequency to a high frequency, the first RU from which the pilot subcarriers are excluded is a first data subcarrier group, the second RU from which the pilot subcarriers are excluded is a second data subcarrier group, the third RU from which the pilot subcarriers are excluded is a third data subcarrier group, and the fourth RU from which the pilot subcarriers are excluded is a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-121:-96], [-68:-43], [17:42], [70:95]}, a sent data signal sequence is [x, -x, x, -x(end:-1:1)]; if an RU combination is {[-121:-96], [-68:-43], [17:42], [96:121]}, a sent data signal sequence is [x, -x, x, x]; if an RU combination is {[-121:-96], [-68:-43], [43:68], [96:121]}, a sent data signal sequence is [x, -x, x, -x(end:-1:1)]; if an RU combination is {[-121:-96], [-42:-17], [17:42], [70:95]}, a sent data signal sequence is [x, -x, x, x]; if an RU combination is {[-121:-96], [-42:-17], [17:42], [96:121]}, a sent data signal sequence is [x, -x, x, x]; if an RU combination is {[-121:-96], [-42:-17], [43:68], [96:121]}, a sent data signal sequence is [x, -x, x, x(end:-1:1)]; if an RU combination is {[-95:-70], [-42:-17], [17:42], [70:95]}, a sent data signal sequence is [x, -x, x, x]; if an RU combination is {[-95:-70], [-42:-17], [17:42], [96:121]}, a sent data signal sequence is [x, -x, x, x]; or if an RU combination is {[-95:-70], [-42:-17], [43:68], [96:121]}, a sent data signal sequence is [x, -x, x, -x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 23

This embodiment is dedicated for four RUs including 26 subcarriers each, and frequency ranges of data subcarriers of the four RUs are different. As shown in FIG. 26, subcarriers of each RU are sorted in ascending order of frequencies, pilot subcarriers in a first RU are located in a 6^{th} bit and a 20^{th} bit, pilot subcarriers in a second RU are located in a 7^{th} bit and a 21^{st} bit, pilot subcarriers in a third RU are located in a 7^{th} bit and a 27^{th} bit, and pilot subcarriers in a fourth RU are located in a 6^{th} bit and a 20^{th} bit.

After the eight pilot subcarriers are excluded, 96 data subcarriers may transmit, for four times, a data signal sequence including 24 data signals. There are 24 data subcarriers remained in each RU after pilot subcarriers are excluded. Therefore, each RU from which the pilot subcarriers are excluded may be used as one subcarrier group, and a corresponding data signal sequence may be set.

A specific grouping situation is as follows: From a low frequency to a high frequency, the first RU from which the pilot subcarriers are excluded is a first data subcarrier group, the second RU from which the pilot subcarriers are excluded is a second data subcarrier group, the third RU from which the pilot subcarriers are excluded is a third data subcarrier group, and the fourth RU from which the pilot subcarriers are excluded is a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-121:-96], [-68:-43], [-16:-4, 4:16], [17:42]}, a sent data signal sequence is [x, -x, -x(end:-1:1), x]; if an RU combination is {[-121:-96], [-68:-43], [-16:-4, 4:16], [43:68]}, a sent data signal sequence is [x, -x, x, x]; if an RU combination is {[-121:-96], [-42:-17], [-16:-4, 4:16], [17:42]}, a sent data signal sequence is [x, -x, -x, x]; if an RU combination is {[-121:-96], [-42:-17], [-16:-4, 4:16], [43:68]}, a sent data signal sequence is [x, -x, x(end:-1:1), x]; if an RU combination is {[-95:-70], [-42:-17], [-16:-4, 4:16], [17:42]}, a sent data signal sequence is [x, -x, -x, x]; or if an RU combination is {[-95:-70], [-42:-17], [-16:-4, 4:16], [43:68]}, a sent data signal sequence is [x, -x, -x(end:-1:1), x].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 24

This embodiment is dedicated for four RUs including 26 subcarriers each, and frequency ranges of data subcarriers of the four RUs are different. As shown in FIG. 27, subcarriers of each RU are sorted in ascending order of frequencies, pilot subcarriers in a first RU are located in a 6^{th} bit and a 20^{th} bit, pilot subcarriers in a second RU are located in a 7^{th} bit and a 21^{st} bit, pilot subcarriers in a third RU are located in a 7^{th} bit and a 27^{th} bit, and pilot subcarriers in a fourth RU are located in a 7^{th} bit and a 21^{st} bit.

After the eight pilot subcarriers are excluded, 96 data subcarriers may transmit, for four times, a data signal sequence including 24 data signals. There are 24 data subcarriers remained in each RU after pilot subcarriers are excluded. Therefore, each RU from which the pilot subcarriers are excluded may be used as one subcarrier group, and a corresponding data signal sequence may be set.

A specific grouping situation is as follows: From a low frequency to a high frequency, the first RU from which the pilot subcarriers are excluded is a first data subcarrier group, the second RU from which the pilot subcarriers are excluded is a second data subcarrier group, the third RU from which the pilot subcarriers are excluded is a third data subcarrier group, and the fourth RU from which the pilot subcarriers are excluded is a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-121:-96], [-68:-43], [-16:-4, 4:16], [70:95]}, a sent data signal sequence is [x, -x, -x(end:-1:1), x(end:-1:1)]; if an RU combination is {[-121:-96], [-68:-43], [-16:-4, 4:16], [96:121]}, a sent data signal sequence is [x, -x, -x, x]; if an RU combination is {[-121:-96], [-42:-17], [-16:-4, 4:16], [70:95]}, a sent data signal sequence is [x, -x, x, -x(end:-1:1)]; if an RU combination is {[-121:-96], [-42:-17], [-16:-4, 4:16], [96:121]}, a sent data signal sequence is [x, -x, x, x]; if an RU combination is {[-95:-70], [-42:-17], [-16:-4, 4:16], [70:95]} a sent data signal sequence is [x, -x, x, x]; or if an RU combination is {[-95:-70], [-42:-17], [-16:-4, 4:16], [96:121]}, a sent data signal sequence is [x, -x, x(end:-1:1), -x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 25

This embodiment is dedicated for four RUs including 26 subcarriers each, and frequency ranges of data subcarriers of the four RUs are different. As shown in FIG. 28, subcarriers of each RU are sorted in ascending order of frequencies, pilot subcarriers in a first RU are located in a 6^{th} bit and a 20^{th} bit, pilot subcarriers in a second RU are located in a 7^{th} bit and a 27^{th} bit, pilot subcarriers in a third RU are located in a 6^{th} bit and a 20^{th} bit, and pilot subcarriers in a fourth RU are located in a 7^{th} bit and a 21^{st} bit.

After the eight pilot subcarriers are excluded, 96 data subcarriers may transmit, for four times, a data signal sequence including 24 data signals. There are 24 data subcarriers remained in each RU after pilot subcarriers are excluded. Therefore, each RU from which the pilot subcarriers are excluded may be used as one subcarrier group, and a corresponding data signal sequence may be set.

A specific grouping situation is as follows: From a low frequency to a high frequency, the first RU from which the pilot subcarriers are excluded is a first data subcarrier group, the second RU from which the pilot subcarriers are excluded is a second data subcarrier group, the third RU from which the pilot subcarriers are excluded is a third data subcarrier group, and the fourth RU from which the pilot subcarriers are excluded is a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-121:-96], [-16:-4, 4:16], [17:42], [70:95]}, a sent data signal sequence is [x, -x, -x, x]; if an RU combination is {[-95:-70], [-16:-4, 4:16], [17:42], [70:95]}, a sent data signal sequence is [x, -x, -x(end:-1:1), x]; if an RU combination is {[-121:-96], [-16:-4, 4:16], [17:42], [96:121]}, a sent data signal sequence is [x, -x, j^{∗}x, -j^{∗}x]; if an RU combination is {[-95:-70], [-16:-4, 4:16], [17:42], [96:121]}, a sent data signal sequence is [x, -x, -x, x]; if an RU combination is {[-121:-96], [-16:-4, 4:16], [43:68], [96:121]} a sent data signal sequence is [x, -x, x(end:-1:1), x]; or if an RU combination is {[-95:-70], [-16:-4, 4:16], [43:68], [96:121]}, a sent data signal sequence is [x, -x, x, x].

### Receive end:

Preprocessing is performed on the adjusted data signal sequence after the data signal sequence is received, in other words, adjustment is performed in a manner inverse to the signal adjustment method, to obtain the original data signal sequence.

### Embodiment 26

This embodiment is dedicated for four RUs including 26 subcarriers each, and frequency ranges of data subcarriers of the four RUs are different. As shown in FIG. 29, subcarriers of each RU are sorted in ascending order of frequencies, pilot subcarriers in a first RU are located in a 7^{th} bit and a 21^{st} bit, pilot subcarriers in a second RU are located in a 7^{th} bit and a 27^{th} bit, pilot subcarriers in a third RU are located in a 6^{th} bit and a 20^{th} bit, and pilot subcarriers in a fourth RU are located in a 7^{th} bit and a 21^{st} bit.

After the eight pilot subcarriers are excluded, 96 data subcarriers may transmit, for four times, a data signal sequence including 24 data signals. There are 24 data subcarriers remained in each RU after pilot subcarriers are excluded. Therefore, each RU from which the pilot subcarriers are excluded may be used as one subcarrier group, and a corresponding data signal sequence may be set.

A specific grouping situation is as follows: From a low frequency to a high frequency, the first RU from which the pilot subcarriers are excluded is a first data subcarrier group, the second RU from which the pilot subcarriers are excluded is a second data subcarrier group, the third RU from which the pilot subcarriers are excluded is a third data subcarrier group, and the fourth RU from which the pilot subcarriers are excluded is a fourth data subcarrier group.

The first data subcarrier group transmits an original data signal sequence x, and a subsequent data subcarrier group transmits a data signal sequence obtained after adjustment is performed by using any three of the foregoing eight signal adjustment methods.

Different RU combinations use different signal adjustment methods, and correspondingly, data signal sequences obtained after adjustment are different, and data signal sequences sent by the transmit end are also different. For ease of description, an array is used to represent each data signal sequence sent by the transmit end.

Specifically, if an RU combination is {[-68:-43], [-16:-4, 4:16], [17:42], [70:95]}, a sent data signal sequence is [x, -x, x, -x(end:-1:1)]; if an RU combination is {[-42:-17], [-16:-4, 4:16], [17:42], [70:95]}, a sent data signal sequence is [x, -x, x(end:-1:1), -x(end:-1:1)]; if an RU combination is {[-68:-43], [-16:-4, 4:16], [17:42], [96:121]}, a sent data signal sequence is [x, -x, x, -x(end:-1:1)]; if an RU combination is {[-42:-17], [-16:-4, 4:16], [17:42], [96:121]}, a sent data signal sequence is [x, -x, x(end:-1:1), -x(end:-1:1)]; if an RU combination is {[-68:-43], [-16:-4, 4:16], [43:68], [96:121]} a sent data signal sequence is [x, -x, -x(end:-1:1), x(end:-1:1)]; or if an RU combination is {[-42:-17], [-16:-4, 4:16], [43:68], [96:121]}, a sent data signal sequence is [x, -x, x(end:-1:1), -x(end:-1:1)].

### Receive end:

Preprocessing is performed on the adjusted data signal sequence after the data signal sequence is received, in other words, adjustment is performed in a manner inverse to the signal adjustment method, to obtain the original data signal sequence.

In the foregoing embodiments, a corresponding signal adjustment method is selected from the predetermined eight signal adjustment methods for each resource unit or each resource unit combination, and an adjusted data signal sequence is generated by using the selected signal adjustment method. The adjusted data signal sequence and the original data signal sequence are sent out together by using data subcarriers. After receiving the data signal sequence, the receive end restores the adjusted data signal sequence to the original data signal sequence. Further, several original data signal sequences may be selected from a plurality of original data signal sequences and may be combined and decoded to obtain an original data signal. In this process, data values of the plurality of groups of data signal sequences sent by the transmit end are not exactly the same, so that the data signal sequences can be prevented from being modulated by signals with a same initial phase, thereby avoiding occurrence of relatively large instantaneous peak power, and further reducing a PAPR.

The following describes a data signal processing apparatus. For description of the data signal processing apparatus, refer to description of the foregoing data signal processing method, and details are not described below.

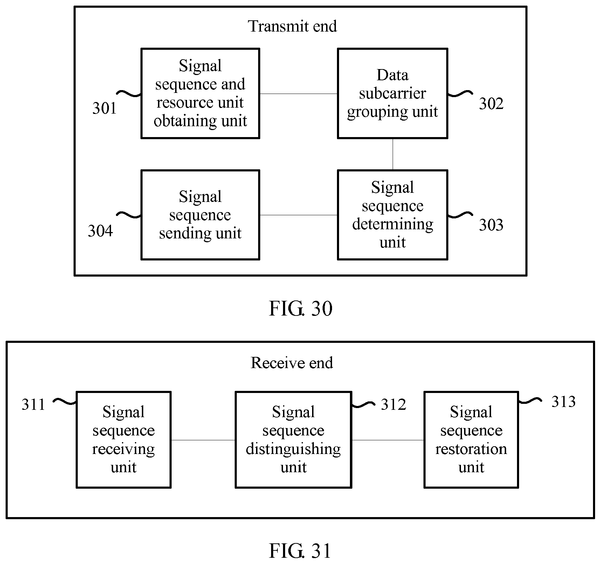

FIG. 30 shows a structure of a data signal processing apparatus applied to a transmit end, specifically including:
a signal sequence and resource unit obtaining unit 301, configured to obtain an original data signal sequence and M resource units, where M is an integer greater than or equal to 1, and the resource units include data subcarriers;
a data subcarrier grouping unit 302, configured to group the data subcarriers in the M resource units into a plurality of groups, where a quantity of data subcarriers in each data subcarrier group is equal to a quantity of data signals in the original data signal sequence;
a signal sequence determining unit 303, configured to determine a corresponding target data signal sequence for each data subcarrier group based on the original data signal sequence, where phases and/or orders of a plurality of target data signal sequences are not exactly the same; and
a signal sequence sending unit 304, configured to send the target data signal sequence by using the data subcarrier group.

The data subcarrier grouping unit 302 and the signal sequence determining unit 303 may be configured to perform data subcarrier grouping and signal adjustment operations in the foregoing embodiments.

FIG. 31 shows a structure of a data signal processing apparatus applied to a receive end, specifically including:
a signal sequence receiving unit 311, configured to receive data signal sequences transmitted by a plurality of data subcarrier groups;
a signal sequence distinguishing unit 312, configured to distinguish between an original data signal sequence and an adjusted data signal sequence that are in the data signal sequences, where the adjusted data signal sequence is obtained after a phase and/or an order of the original data signal sequence are/is adjusted; and
a signal sequence restoration unit 313, configured to restore the adjusted data signal sequence to the original data signal sequence.

In an aspect for distinguishing between the original data signal sequence and the adjusted data signal sequence that are in the data signal sequences, the signal sequence distinguishing unit is specifically configured to:
use a first data signal sequence as the original data signal sequence; and use a data signal sequence following the first data signal sequence as the adjusted data signal sequence.

The methods or algorithm steps described with reference to the content disclosed in this application may be implemented in a hardware manner, or may be implemented in a manner of executing a software instruction by a processor. The software instruction may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other forms well-known in the art. A storage medium used as an example is coupled to the processor, so that the processor can read information from the storage medium, and can write information into the storage medium. Certainly, the storage medium may be a part of the processor. The processor and the storage medium may be located in an ASIC. In addition, the ASIC may be located in user equipment. Certainly, the processor and the storage medium may exist in the user equipment as discrete components.

A person of skill in the art should be aware that in one or more of the foregoing examples, the functions described in this application may be implemented by using hardware, software, firmware, or any combination thereof. When this application is implemented by software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general or dedicated computer.

In the foregoing specific implementations, the objective, technical solutions, and benefits of this application are further described in detail. It should be understood that the foregoing descriptions are merely specific implementations of this application, but are not intended to limit the protection scope of this application. Any modification, equivalent replacement, or improvement made based on the technical solutions of this application shall fall within the protection scope of this application.

## Claims

1. A data signal processing method, applied to a transmit end, wherein the method comprises:
obtaining an original data signal sequence and M resource units, wherein M is an integer greater than or equal to 1, and the resource units comprise data subcarriers;
grouping the data subcarriers in the M resource units into a plurality of groups, wherein a quantity of data subcarriers in each data subcarrier group is equal to a quantity of data signals in the original data signal sequence;
determining a corresponding target data signal sequence for each data subcarrier group based on the original data signal sequence, wherein phases and/or orders of a plurality of target data signal sequences are not exactly the same; and
sending the target data signal sequence by using the data subcarrier group.

2. The data signal processing method according to claim 1, wherein a frequency-based sorting relationship of the data subcarrier groups exists, and
correspondingly, the determining a corresponding target data signal sequence for each data subcarrier group based on the original data signal sequence comprises:
determining the original data signal sequence as a target data signal sequence corresponding to a first data subcarrier group; and
adjusting an order and/or a phase of the original data signal sequence by using a predetermined signal adjustment method, and determining the adjusted data signal sequence as a target data signal sequence corresponding to a subsequent data subcarrier group.

3. The data signal processing method according to claim 1, wherein the grouping the data subcarriers in the M resource units into a plurality of groups comprises:
sorting the data subcarriers of the M resource units in ascending order or descending order of frequencies, and sequentially grouping data subcarriers whose quantity is the same as the quantity of the data signals in the original data signal sequence into one data subcarrier group.

4. The data signal processing method according to claim 1, wherein the frequencies of the data subcarriers in the resource units are symmetrically distributed.

5. The data signal processing method according to claim 2, wherein the original data signal sequence is x, and the signal adjustment method comprises any combination of the following:
x, -x, j^{∗}x, -j^{∗}x, x(end:-1:1), -x(end:-1:1), j^{∗}x(end:-1:1), and -j^{∗}x(end:-1:1).

6. The data signal processing method according to claim 5, wherein
the resource units comprise [-16:-4, 4:16], the data subcarriers in the resource units are grouped into four groups, and signal adjustment methods corresponding to the four data subcarrier groups are: [x, j^{∗}x(end:-1:1), -j^{∗}x, -x(end:-1:1)].

7. The data signal processing method according to claim 5, wherein
the resource units comprise [-95:-70] and [70:95], the data subcarriers in the resource units are grouped into four groups, and signal adjustment methods corresponding to the four data subcarrier groups are: [x, -x, -x, -x].

8. The data signal processing method according to claim 5, wherein
the resource units comprise [-68:-43] and [43:68], the data subcarriers in the resource units are grouped into four groups, and signal adjustment methods corresponding to the four data subcarrier groups are: [x, x, -x, x].

9. The data signal processing method according to claim 5, wherein
the resource units comprise [-42:-17] and [17:42], the data subcarriers in the resource units are grouped into four groups, and signal adjustment methods corresponding to the four data subcarrier groups are: [x, j^{∗}x(end:-1:1), -j^{∗}x, -x(end:-1:1)].

10. The data signal processing method according to claim 5, wherein
the resource units comprise [-121:-70] and [70:121], the data subcarriers in the resource units are grouped into four groups, and signal adjustment methods corresponding to the four data subcarrier groups are: [x, -x, -x, -x].

11. The data signal processing method according to claim 5, wherein
the resource units comprise [-68:-17] and [17:68], the data subcarriers in the resource units are grouped into four groups, and signal adjustment methods corresponding to the four data subcarrier groups are: [x, -x, -x(end:-1:1), -x(end:-1:1)].

12. The data signal processing method according to claim 5, wherein
the resource units comprise [-121:-96], [-68:-43], [43:68], and [96:121], the data subcarriers in the resource units are grouped into four groups, and signal adjustment methods corresponding to the four data subcarrier groups are: [x, -x, x, -x(end:-1:1)].

13. The data signal processing method according to claim 5, wherein
the resource units comprise [-121:-96], [-42:-17], [17:42], and [96:121], the data subcarriers in the resource units are grouped into four groups, and signal adjustment methods corresponding to the four data subcarrier groups are: [x, -x, x, x].

14. The data signal processing method according to claim 5, wherein
the resource units comprise [-95:-70], [-42:-17], [17:42], and [70:95], the data subcarriers in the resource units are grouped into four groups, and signal adjustment methods corresponding to the four data subcarrier groups are: [x, -x, x, x].

15. A data signal processing method, applied to a receive end, wherein the method comprises:
receiving data signal sequences transmitted by a plurality of data subcarrier groups;
distinguishing between an original data signal sequence and an adjusted data signal sequence that are in the data signal sequences, wherein the adjusted data signal sequence is obtained after a phase and/or an order of the original data signal sequence are/is adjusted; and
restoring the adjusted data signal sequence to the original data signal sequence.

16. The data signal processing method according to claim 15, wherein the distinguishing between an original data signal sequence and an adjusted data signal sequence that are in the data signal sequences comprises:
using a first data signal sequence as the original data signal sequence; and
using a data signal sequence following the first data signal sequence as the adjusted data signal sequence.

17. A data signal processing apparatus, applied to a transmit end, wherein the apparatus comprises:
a signal sequence and resource unit obtaining unit, configured to obtain an original data signal sequence and M resource units, wherein M is an integer greater than or equal to 1, and the resource units comprise data subcarriers;
a data subcarrier grouping unit, configured to group the data subcarriers in the M resource units into a plurality of groups, wherein a quantity of data subcarriers in each data subcarrier group is equal to a quantity of data signals in the original data signal sequence;
a signal sequence determining unit, configured to determine a corresponding target data signal sequence for each data subcarrier group based on the original data signal sequence, wherein phases and/or orders of a plurality of target data signal sequences are not exactly the same; and
a signal sequence sending unit, configured to send the target data signal sequence by using the data subcarrier group.

18. The data signal processing apparatus according to claim 17, wherein a frequency-based sorting relationship of the data subcarrier groups exists, and
correspondingly, in an aspect for determining the corresponding target data signal sequence for each data subcarrier group based on the original data signal sequence, the signal sequence determining unit is specifically configured to:
determine the original data signal sequence as a target data signal sequence corresponding to a first data subcarrier group; and
adjust an order and/or a phase of the original data signal sequence by using a predetermined signal adjustment method, and determine the adjusted data signal sequence as a target data signal sequence corresponding to a subsequent data subcarrier group.

19. The data signal processing apparatus according to claim 17, wherein in an aspect for grouping the data subcarriers in the M resource units into the plurality of groups comprises, the data subcarrier grouping unit is specifically configured to:
sort the data subcarriers of the M resource units in ascending order or descending order of frequencies, and sequentially group data subcarriers whose quantity is the same as the quantity of the data signals in the original data signal sequence into one data subcarrier group.

20. The data signal processing apparatus according to claim 17, wherein the frequencies of the data subcarriers in the resource units obtained by the signal sequence and resource unit obtaining unit are symmetrically distributed.

21. The data signal processing apparatus according to claim 18, wherein the original data signal sequence obtained by the signal sequence and resource unit obtaining unit is x, and the signal adjustment method used by the signal sequence determining unit comprises any combination of the following:
x, -x, j^{∗}x, -j^{∗}x, x(end:-1:1), -x(end:-1:1), j^{∗}x(end:-1:1), and -j^{∗}x(end:-1:1).

22. The data signal processing apparatus according to claim 21, wherein
the resource units comprise [-16:-4, 4:16], the data subcarrier grouping unit groups the data subcarriers in the resource units into four groups, and signal adjustment methods corresponding to the four data subcarrier groups are: [x, j^{∗}x(end:-1:1), -j^{∗}x, -x(end:-1:1)].

23. The data signal processing apparatus according to claim 21, wherein
the resource units comprise [-95:-70] and [70:95], the data subcarrier grouping unit groups the data subcarriers in the resource units into four groups, and signal adjustment methods corresponding to the four data subcarrier groups are: [x, -x, -x, -x].

24. The data signal processing apparatus according to claim 21, wherein
the resource units comprise [-68:-43] and [43:68], the data subcarrier grouping unit groups the data subcarriers in the resource units into four groups, and signal adjustment methods corresponding to the four data subcarrier groups are: [x, x, -x, x].

25. The data signal processing apparatus according to claim 21, wherein
the resource units comprise [-42:-17] and [17:42], the data subcarrier grouping unit groups the data subcarriers in the resource units into four groups, and signal adjustment methods corresponding to the four data subcarrier groups are: [x, j^{∗}x(end:-1:1), -j^{∗}x, -x(end:-1:1)].

26. The data signal processing apparatus according to claim 21, wherein
the resource units comprise [-121:-70] and [70:121], the data subcarriers in the resource units are grouped into four groups, and signal adjustment methods corresponding to the four data subcarrier groups are: [x, -x, -x, -x].

27. The data signal processing apparatus according to claim 21, wherein
the resource units comprise [-68:-17] and [17:68], the data subcarrier grouping unit groups the data subcarriers in the resource units into four groups, and signal adjustment methods corresponding to the four data subcarrier groups are: [x, -x, -x(end:-1:1), -x(end:-1:1)].

28. The data signal processing apparatus according to claim 21, wherein
the resource units comprise [-121:-96], [-68:-43], [43:68], and [96:121], the data subcarrier grouping unit groups the data subcarriers in the resource units into four groups, and signal adjustment methods corresponding to the four data subcarrier groups are: [x, -x, x, -x(end:-1:1)].

29. The data signal processing apparatus according to claim 21, wherein
the resource units comprise [-121:-96], [-42:-17], [17:42], and [96:121], the data subcarrier grouping unit groups the data subcarriers in the resource units into four groups, and signal adjustment methods corresponding to the four data subcarrier groups are: [x, -x, x, x].

30. The data signal processing apparatus according to claim 21, wherein
the resource units comprise [-95:-70], [-42:-17], [17:42], and [70:95], the data subcarrier grouping unit groups the data subcarriers in the resource units into four groups, and signal adjustment methods corresponding to the four data subcarrier groups are: [x, -x, x, x].

31. A data signal processing apparatus, applied to a receive end, and the apparatus comprises:
a signal sequence receiving unit, configured to receive data signal sequences transmitted by a plurality of data subcarrier groups;
a signal sequence distinguishing unit, configured to distinguish between an original data signal sequence and an adjusted data signal sequence that are in the data signal sequences, wherein the adjusted data signal sequence is obtained after a phase and/or an order of the original data signal sequence are/is adjusted; and
a signal sequence restoration unit, configured to restore the adjusted data signal sequence to the original data signal sequence.

32. The data signal processing apparatus according to claim 31, wherein in an aspect for distinguishing between the original data signal sequence and the adjusted data signal sequence that are in the data signal sequences, the signal sequence distinguishing unit is specifically configured to:
use a first data signal sequence as the original data signal sequence; and
use a data signal sequence following the first data signal sequence as the adjusted data signal sequence.

33. A transmit end, comprising a processor and a memory, wherein the processor performs at least the following steps by running a software program stored in the memory and invoking data stored in the memory:
obtaining an original data signal sequence and M resource units, wherein M is an integer greater than or equal to 1, and the resource units comprise data subcarriers;
grouping the data subcarriers in the M resource units into a plurality of groups, wherein a quantity of data subcarriers in each data subcarrier group is equal to a quantity of data signals in the original data signal sequence;
determining a corresponding target data signal sequence for each data subcarrier group based on the original data signal sequence, wherein phases and/or orders of a plurality of target data signal sequences are not exactly the same; and
sending the target data signal sequence by using the data subcarrier group.

34. A receive end, comprising a processor and a memory, wherein the processor performs at least the following steps by running a software program stored in the memory and invoking data stored in the memory:
receiving data signal sequences transmitted by a plurality of data subcarrier groups;
distinguishing between an original data signal sequence and an adjusted data signal sequence that are in the data signal sequences, wherein the adjusted data signal sequence is obtained after a phase and/or an order of the original data signal sequence are/is adjusted; and
restoring the adjusted data signal sequence to the original data signal sequence.
